# EUROPEAN PATENT APPLICATION

(11) **EP 1 045 385 A1**
(43) Date of publication of application: **18.10.2000**
(21) Application number: 00303136.6
(22) Date of filing: 13.04.2000
(51) Int. Cl.: G11B 19/04, G11B 5/09

(54) **Information recording and reproduction apparatus and disk drive**

(30) Priority: 13.04.1999 US 128928 P
(71) Applicant: Texas Instruments Incorporated, Dallas, Texas 75251 (US)
(72) Inventor: Kuwano, Hiromichi, Setagaya, Tokyo 154-0014 (JP); Hashizume, Motomu, Suginami, Tokyo 167-0054 (JP)
(74) Representative: Potter, Julian Mark

(57) **Abstract**

An information recording and reproduction apparatus and disk drive capable of preventing the length of the signal lines from effecting the write and read properties and preventing deterioration of properties along with an increase in the transfer rate, where provision is made of a companion circuit which, in response to mode signals, sets the potentials of two signal lines, sends the differential write signals to the signal lines, receives the differential read signals sent over the signal lines, etc. detects faults based on information from an active head amplifier and an active head amplifier which judges the operation mode from the potentials of the signal lines, supplies a write signal to the write head at the time of the write mode, reads data by a reproduction head and sends it to the signal lines at the time of the read mode, and makes the potentials of the signal lines shift to outside the potential levels of the signal lines set for each mode when there is a fault at the time of the write, read, or idle mode.

## Description

The present invention relates to an information recording and reproduction apparatus and disk drive, in particular, but not exclusively such as a hard disk drive (HDD) using a randomly accessible disk medium.

Hard disk drives are being made wide use of as storage apparatuses for personal computers etc. for example due to the fact that they are randomly accessible etc.

A hard disk drive is comprised of a disk assembly unit comprised of a plurality of coaxially arranged disk media on which data recording tracks are formed, a spindle motor for making the disk assembly unit rotate at a predetermined rotational speed, a head assembly unit having a plurality of heads provided corresponding to the track formation surfaces of the disk media of the disk assembly unit, a head drive system including a voice coil motor for controlling the motion of the heads of the head assembly unit in the radial direction of the disk media of the disk assembly unit to position them at track positions designated by addresses, and a read/write circuit for reading data from predetermined tracks by heads designated by addresses or writing data on predetermined tracks by heads designated by addresses.

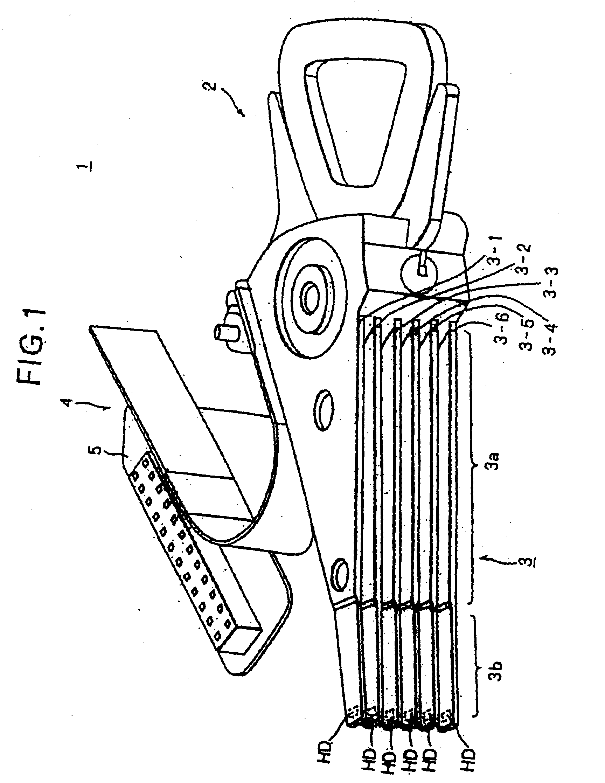

Figure 1 is a view showing in brief a general head assembly unit.

As shown in Fig. 1, the head assembly unit 1 is comprised of an actuator unit 2, and arm assembly unit 3, and a flexible cable unit 4. These are housed in the same hermetically sealed package along with a not shown disk assembly unit.

The arm assembly unit 3 is comprised of a plurality of arms (in Fig. 1, six) 3-1 to 3-6 each comprised of a base unit 3a connected to the actuator unit 2 and a tapered suspension unit 3b connected to the front end of the base unit 3a.

Further, head units HD are provided at the front ends of the suspension units 3b of the arms 3-1 to 3-6.

The flexible cable uni 4 is provided for transferring signals between the heads and the read/write circuit.

The signal to be read or written by a head, however, has a small signal amplitude, so a pre-amplifier including a writer serving as the driver at the time of writing and a reader serving as the driver at the time of reading generally becomes necessary.

Therefore, in the hard disk drive of the related art, the pre-amplifier was provided at a connector unit 5 for connection with the signal path outside the package through wires of the flexible cable.

Further, head units (slider units) were provided individually for the write heads and the reproduction heads.

The write heads are comprised of induction type heads comprised of thin films which each pass a current supplied by the pre-amplifier to a coil to generate a magnetic field and change the direction of magnetization of the magnetic material of the disk medium to write data.

The reproduction heads have been comprised of induction type heads in the same way as the write heads. In such induction type reproduction heads, the direction of magnetization on the disk medium is detected by the induced current. This induced current is sent to the pre-amplifier through the wires of the flexible cable.

Since the sensitivity was insufficient with such induction type reproduction heads, however, starting around 1991, use began to be made of magnetoresistive (MR) heads for detecting the direction of magnetization using the MR effect of the changing electrical resistance of a ferromagnetic material.

The use of MR heads, which enabled the reproduction sensitivity to be raised, has resulted in striking improvements in the recording densities of hard disk drives.

Further, in recent years, use has begun to be made of so-called "giant magnetoresistive" (GMR) heads which are able to further raise the reproduction sensitivity over that of MR heads and can smash the limits on recording density in the case of use of MR heads.

Summarizing, a problem to be addressed by an embodiment of the present invention, faster hard disk drives are being developed - from those with data transfer rates of a hundred of Mbps to ones of 200 to 500 Mbps or even 600 to 800 Mbps.

In a hard disk drive mounting a pre-amplifier in the connector unit 5 as explained above, however, while there is no problem when the data transfer rate is relatively low, the higher the data transfer rate becomes, the less negligible the effect of the total inductance of the wire cable including the arm portion connecting the heads and pre-amplifier, becomes.

Specifically, the total inductance of the wire cable including the arm portion connecting the heads and pre-amplifier is for example 30 to 60 nH (nanohenry).

At the time of writing, since it is necessary to increase the write speed, the inductance in current write systems is set to a small 30 to 60 nH for example or even 25 nH, so the above total inductance of 30 to 60 nH (nanohenry) cannot be ignored.

In the read system the use of MR or GMR heads has resulted in improvement in the reproduction sensitivity, but in the read system it is necessary to increase the band width, so when considering the MR resistance value and the capacitance of the input lines, the above total inductance cannot be ignored.

As explained above, since the long length of the signal lines from the heads to the pre-amplifier has an effect on the write and read properties, it may be considered to provide the pre-amplifier at the arm as well, but this is currently close to impossible due to the fact that there are a large 10 or so signal lines despite the limited space at the arm portion.

The conditions become even more severe in environments of hard disk drives now being reduced in size from 3.5 inch types to 2.5 inch types.

Further, even if it became possible to lay a large number of signal lines, they would inevitably end up arranged at a fine pitch. As a result, the inductance would increase and the advantage of arranging the pre-amplifier at the arm side and reducing the length of the signal lines would end up being reduced.

An embodiment of the invention provides an information recording and reproduction apparatus and disk apparatus which can prevent the effect of the length of the signal lines on the write and read properties and can prevent deterioration of the properties along with an increase in the transfer rate.

According to a first aspect of the present invention, there is provided an information recording and reproduction apparatus having at least a write mode and a read mode, comprising a recording medium; a head for writing data on the recording medium upon receiving a write signal in the write mode and for reading data recorded on the recording medium in the read mode; a signal line; a first circuit having a first write system circuit for setting the potential of the signal line to within a predetermined first level range and sending a write signal to the signal line at the time of the write mode and a first read system circuit for setting the potential of the signal line to within a second level range different from the first level range and receiving read data sent over the signal line at the time of the read mode; and a second circuit having a second write system circuit for judging that the mode is the write mode when the potential of the signal line is within the first level range and supplying the write signal sent over the signal line by the first circuit to the head and a second read system circuit for judging that the mode is the read mode when the potential of the signal line is within the second level range, reading the data recorded on the recording medium by the head, and sending the read data to the signal line to send it to the first circuit.

Preferably, the head is provided at a predetermined position of an arm and the second circuit is provided near the position of arrangement of the head at the arm.

Preferably, the first circuit has a mode setting circuit for setting the potential of the signal line to within a third level range different from the first and second level ranges and the second circuit has a circuit for judging that the mode is a third mode when the potential level of the signal line is within the third level range.

More preferably, the first circuit has a second mode setting circuit for setting the potential of the signal line to within a fourth level range including within the first, second, and third level ranges and the second circuit has a circuit for judging that the mode is a fourth mode when the potential of the signal line is within the fourth level range.

More preferably, the second circuit has a first fault detection circuit for making the potential of the signal line shift outside the first level range when a fault occurs in the write mode and the first circuit has a second fault detection circuit for generating a fault detection signal indicating that a fault has occurred in the write mode when the potential level of the signal line has shifted to outside the first level range regardless of it having to be within the first level range.

Alternatively, preferably the second circuit has a first fault detection circuit for making the potential of the signal line shift outside the second level range when a fault occurs in the read mode and the first circuit has a second fault detection circuit for generating a fault detection signal indicating that a fault has occurred in the read mode when the potential level of the signal line has shifted to outside the second level range regardless of it having to be within the second level range.

In some of the above cases, preferably the second circuit has a third fault detection circuit for making the potential of the signal line shift outside the second level range when a fault occurs in the read mode and the first circuit has a fourth fault detection circuit for generating a fault detection signal indicating that a fault has occurred in the read mode when the potential level of the signal line has shifted to outside the second level range regardless of it having to be within the second level range.

In other cases, preferably the second circuit has a first fault detection circuit for making the potential of the signal line shift outside the third level range when a fault occurs in the third mode and the first circuit has a second fault detection circuit for generating a fault detection signal indicating that a fault has occurred in the third mode when the potential level of the signal line has shifted to outside the third level range regardless of it having to be within the third level range.

In still other cases, preferably the second circuit has a third fault detection circuit for making the potential of the signal line shift outside the third level range when a fault occurs in the third mode and the first circuit has a fourth fault detection circuit for generating a fault detection signal indicating that a fault has occurred in the third mode when the potential level of the signal line has shifted to outside the third level range regardless of it having to be within the third level range.

In still other cases, preferably the second circuit has a fifth fault detection circuit for making the potential of the signal line shift outside the third level range when a fault occurs in the third mode and the first circuit has a sixth fault detection circuit for generating a fault detection signal indicating that a fault has occurred in the third mode when the potential level of the signal line has shifted to outside the third level range regardless of it having to be within the third level range.

According to a second aspect of the present invention, there is provided a disk drive having at least a write mode and a read mode, comprising a disk assembly unit comprising coaxially arranged disks on which are formed tracks on which data is recorded and rotated at a predetermined rotational speed; a head assembly unit having a plurality of heads provided corresponding to the track formation surfaces of the disk media of the disk assembly unit, receiving write signals and writing data on the disk media at the time of the write mode, and reading data recorded on the disk media at the time of the read mode; a head drive system for controlling the movement of the heads of the head assembly unit in the radial direction of the disk media of the disk assembly unit to position them at the desired locations; one or two signal lines; a companion circuit having a first write system circuit for setting the potential of the signal line to within a predetermined first level range and sending a write signal to the signal line at the time of the write mode and a first read system circuit for setting the potential of the signal line to within a second level range different from the first level range and receiving read data sent over the signal line at the time of the read mode; and an active head circuit having a second write system circuit for judging that the mode is the write mode when the potential of the signal line is within the first level range and supplying the write signal sent over the signal line by the companion circuit to a head and a second read system circuit for judging that the mode is the read mode when the potential of the signal line is within the second level range, reading the data recorded on a recording medium by a head, and sending the read data to the signal line to send it to the companion circuit.

Preferably a differential write signal or read data are sent to the two signal lines.

Preferably, a head is provided at a predetermined position at the front end of an arm and the active head circuit is provided near the position of arrangement of the head at the arm.

The preferred embodiments of the information recording and reproduction apparatus outlined above apply also to the disk drive except for reading "first circuit" as "companion circuit" and "second circuit" as "active head circuit".
More specifically, in accordance with embodiments of the present invention, the potential of the signal line is set to become the first level range by the first write system circuit of the first circuit (companion circuit) at the time of the write mode.

When the potential of the signal line is within the first level range, the second write system circuit of the second circuit (active head circuit) connected with the first circuit by the signal line judges that the mode is the write mode.

Further, write signals are sent over one or two signal lines from the first write system circuit of the first circuit.

The write signal sent over the signal line is input to the second write system circuit of the second circuit and the write signal (write data) is supplied to a head by the second write system circuit. Due to this, data is written on a predetermined track of the recording medium (disk) by the head.

When a fault occurs at the time of the write mode, the potential of the signal line is shifted to outside the first level range by the first fault detection circuit provided at the second circuit.

When the potential of the signal line has been shifted outside the first level range, the second fault detection circuit provided at the first circuit judges that the potential level of the signal line has shifted outside the first level range despite having to be within the first level range and generates a fault detection signal indicating that a fault has occurred at the time of the write mode.

Further, the potential of the signal line is set to become the second level range by the first read system circuit of the first circuit (companion circuit) at the time of the read mode.

When the potential of the signal line is within the second level range, the second read system circuit of the second circuit (active head circuit) connected with the first circuit by the signal line judges that the mode is the read mode.

When it is judged that the mode is the read mode, a head reads the data recorded on the recording medium, and the read data is sent over the signal line by the second read system circuit of the second circuit, received by the first read system circuit of the first circuit, and sent to the processing circuit.

When a fault occurs at the time of the read mode, the potential of the signal line is shifted to outside the second level range by the first fault detection circuit provided at the second circuit.

When the potential of the signal line has been shifted outside the second level range, the second fault detection circuit provided at the first circuit judges that the potential level of the signal line has shifted outside the second level range despite having to be within the second level range and generates a fault detection signal indicating that a fault has occurred at the time of the read mode.

Further, according to embodiments of the present invention, there is also a third mode, for example, an idle mode, in addition to the write mode and the read mode.

In this case, the potential of the signal line is set by the mode setting circuit of the first circuit to within a third level range different from the first and second level ranges.

Further, the second circuit (active head circuit) connected to the first circuit by a signal line judges that the potential is within the third level range and processing according to that mode is performed.

When a fault occurs at the time of the third mode, the potential of the signal line is shifted to outside the third level range by the first fault detection circuit provided at the second circuit.

When the potential of the signal line has been shifted outside the third level range, the second fault detection circuit provided at the first circuit judges that the potential level of the signal line has shifted outside the third level range despite having to be within the third level range and generates a fault detection signal indicating that a fault has occurred at the time of the third mode.

According to an embodiment of the present invention, there is only one or two signal lines connecting the first circuit (companion circuit) and second circuit (active head circuit). Processing and data transfer are performed in accordance with the respective modes.

Therefore, it is possible to secure a sufficient distance between wiring.

Due to this, it is possible to reduce the total inductance due to the wiring and arrange the first circuit (active head circuit) directly driving a head close to the head.

As a result, the rising edge and the trailing edge of the write current can be made sharp and therefore the write operation can be made higher in speed.

Further, it becomes possible to increase the band width of the read system and therefore the reproduction can be made higher in speed.

Specific embodiments of the invention will now be described by way of example only, and with reference to the accompanying drawings, in which:
Fig. 1 is a view explaining in brief a general head assembly unit;
Fig. 2 is a view of the system configuration of a hard disk drive according to an embodiment of the present invention;
Fig. 3 is a simplified sectional view for explaining the structure of a disk medium and head unit;
Fig. 4 is a block diagram showing in brief the configuration of the active head amplifier and companion circuit according to an embodiment of the present invention;
Fig. 5 is a view for explaining the correspondence between the modes and the potentials of the signal line;
Fig. 6 is a circuit diagram of an example of the configuration of the active head amplifier and companion circuit according to an embodiment of the present invention;
Fig. 7 is a circuit diagram of a specific example of the configuration of a writer provided at the active head amplifier according to an embodiment of the present invention;
Fig. 8 is a circuit diagram of a specific example of the configuration of a reader provided at the active head amplifier according to an embodiment of the present invention;
Fig. 9 is an equivalent circuit diagram for explaining the operation at the time of a read mode of the active head amplifier and companion circuit according to an embodiment of the present invention; and
Fig. 10 is an equivalent circuit diagram for explaining the operation at the time of a write mode of the active head amplifier and companion circuit according to an embodiment of the present invention.

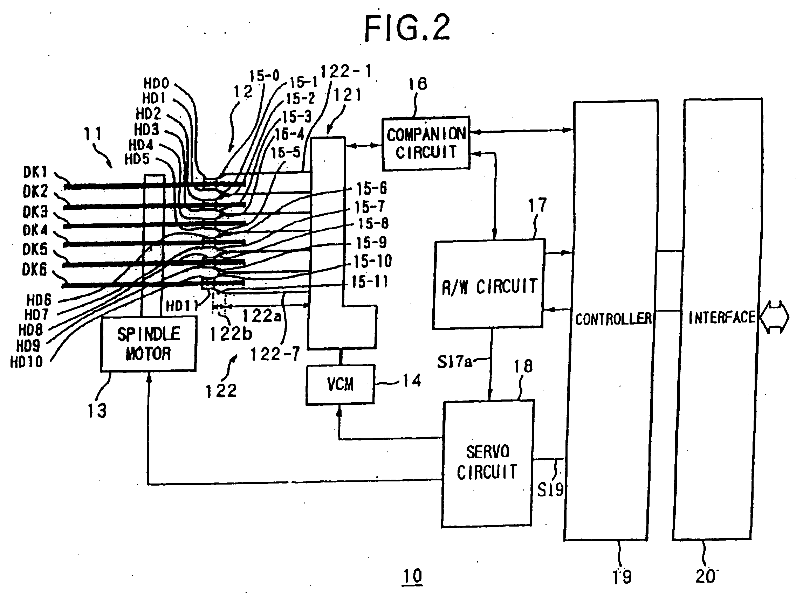

Figure 2 is a view of the system configuration of a hard disk drive according to an embodiment of the present invention

The hard disk drive 10, as shown in Fig. 2, is comprised of a disk assembly unit 11, a head assembly unit 12, a spindle motor 13, a voice coil motor (VCM) 14, active head amplifiers (second circuit) 15-0 to 15-11, a companion circuit (first circuit) 16, a read/write (R/W) circuit 17, a servo circuit 18, a controller 19, and an interface with not shown the host computer, that is, for example ANSI small computer system interface (SCSI) 20.

The disk assembly unit 11 is comprised for example of six disk media DK1 to DK6 arranged coaxially at predetermined intervals.

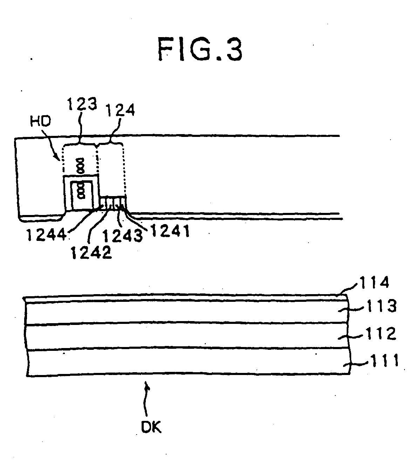

The disk media DK1 to DK6, for example, as shown in Fig. 3, are each comprised of a disk substrate 111 on which are provided a magnetic recording layer 112, comprised of a magnetic material, for recording data, a protective layer 113 formed on the magnetic recording layer 112, and a lubricant coated on the protective layer 113.

Each of the disk media DK1 to DK6 is formed with a plurality of tracks. These tracks are each divided into a plurality of sectors. Note that the size of the sectors is set for example to 512 bytes.

The disk assembly unit 11 having such a configuration is made to rotate at for example 7200 rpm by the spindle motor 13 driven by the servo circuit 18 receiving a control signal S19 from the controller 19 and a servo system detection signal S17a from the R/W circuit 17.

The head assembly unit 12 is provided with an actuator unit 121 and an arm assembly unit 122. These are housed in the same hermetically sealed package along with the not shown disk assembly unit.

The arm assembly unit 122 is comprised of a plurality of (in the present embodiment, seven) arms 122-1 to 122-7 each comprised of a base unit 122a connected to the actuator unit 121 and a suspension unit 122b connected to the front end of the base unit 122a.

A head unit HD is provided at the front end of the suspension unit 122b of each of the arms 122-1 to 122-7.

Specifically, in the head assembly unit 12, head units HD0 to HD11 are provided for reading data from the tracks of the surfaces or writing data to the tracks corresponding to the top and bottom surfaces of the six disk media DK1 to DK6 of the disk assembly unit 11.

The top surface of the disk medium DK1 is accessed (including read, write, and seek operations) by the head unit HD0, and the bottom surface is accessed by the head unit HD1. In the same way, the top surface of the disk medium DK2 is accessed by the head unit HD2, and the bottom surface is accessed by the head unit HD3; the top surface of the disk medium DK3 is accessed by the head unit HD4, and the bottom surface is accessed by the head unit HD5; the top surface of the disk medium DK4 is accessed by the head unit HD6, and the bottom surface is accessed by the head unit HD7; the top surface of the disk medium DK5 is accessed by the head unit HD8, and the bottom surface is accessed by the head unit HD9; and the top surface of the disk medium DK6 is accessed by the head unit HD10, and the bottom surface is accessed by the head unit HD11.

The head units HD0 to HD11, as shown in Fig. 3, are provided separately for the write heads 123 and the reproduction heads 124.

The write heads 123 are comprised of induction type heads, for example, comprised of thin films which each pass a current supplied by active head amplifier to a coil to generate a magnetic field and change the direction of magnetization of the magnetic material of the magnetic recording layer of the disk medium DK to write data.

The reproduction heads 124 are, for example, comprised by GMR heads.

The reproduction heads, that is, the GMR heads, as shown in Fig. 3, are each comprised of a first ferromagnetic material layer 1241, a second ferromagnetic material layer 1242, a conductive layer 1243, and an antiferromagnetic material layer 1244.

The GMR heads have so-called spin valve structures with conductive layers 1243 provided between the first and second ferromagnetic material layers 1241 and 1242.

The first ferromagnetic material layer 1241 is a free layer where the direction of the magnetic moment inverts. The magnetic moment changes in accordance with the direction of magnetization of the disk medium DK.

The second ferromagnetic material layer 1242 is a pin layer where the magnetic moment is fixed.

The second ferromagnetic layer 1242 serving as the pin layer has the antiferromagnetic material layer 1244 added to it. A magnetic bond is caused and the direction of magnetic moment is therefore fixed.

In such a configuration of GMR heads, when the magnetic moment of the second ferromagnetic material layer (pin layer) 1242 and the first ferromagnetic material layer (free layer) 1241 are the same in direction, the current flowing through the spin valve becomes larger.

On the other hand, when the magnetic moments are different in direction, the current flowing through the spin valve becomes smaller.

The head units HD comprised of these write heads 123 and reproduction heads 124, as explained above, are provided at the front ends of the suspension units 122b of the arms 122-1 to 122-6. The suspension units 122b are further provided with active head amplifiers 15-0 to 15-11 connected to the head units HD0 to HD11 and including writers and readers provided at general hard disk drive amplifiers.

Further, near the actuator 121 is provided a companion circuit 16 for controlling the write and read currents etc. in accordance with the operation mode in cooperation with the active head amplifiers 15-0 to 15-11.

Note that the head assembly unit 12 having the above configuration is controlled to move in the radial direction of the disk media DK1 to DK6 by the VCM 14 driven by the servo circuit 18 receiving the control signal S19 from the controller 19 and the servo system detection signal S17a from the R/W circuit 17. The heads HD0 to HD11 are positioned at predetermined tracks based on the address designations.

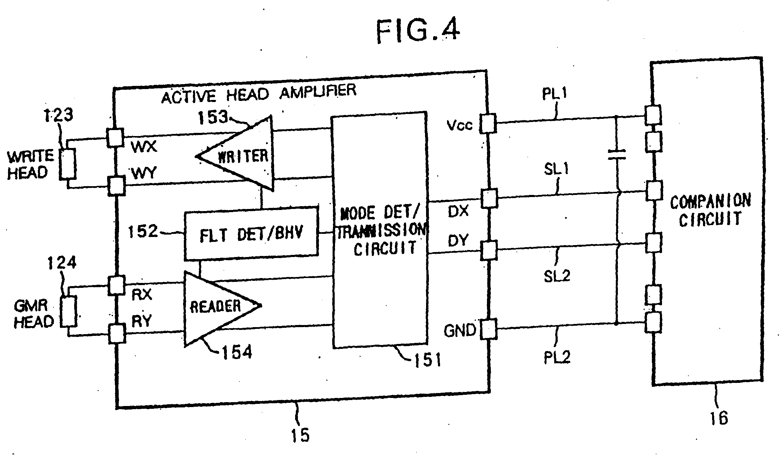

The active head amplifiers 15-0 to 15-11 and the companion circuit 16, as shown in Fig. 4, are each connected by two signal lines SL1, SL2 and two power lines PL1, PL2 of the power supply voltage V_{CC} and the ground voltage GND, that is, a total of only four wires.

Note that, when the negative power supply voltage V_{EE} is necessary to the active head amplifier, a power line PL3 for supplying the negative power supply voltage V_{EE} is added.

In the hard disk drive 10, the operation modes may be roughly divided into three modes, that is, a sleep mode, an active mode, and a buffered head voltage (BHV) mode.

The sleep mode is the mode at the time of startup of power where almost no current is flowing.

The active mode may more specifically be divided into an idle mode, write mode, read mode, and serial interface (SIF) mode.

In actuality, the modes shift from sleep to idle to read to write to read to idle and back to sleep. There is never a shift directly from the idle mode to the write mode.

In the SIF mode, the clock CLK_{SIF}, data DT_{SIF}, and read back data RBDT_{SIF} are transferred.

The BHV mode is the mode for outputting a voltage across a head by a differential signal the same as a read signal in order to check for fluctuations in the impedance of a reproduction head, that is, GMR head.

The sleep mode, active mode, and BHV mode are switched between in the SIF.

Further, when an error occurs at the time of a normal read operation or write operation, an abnormality occurs in the power supply, for example, the power supply voltage V_{CC} falls or the ground voltage GND becomes electrically open, etc., a fault (FLT) mode is entered and the sleep mode is immediately shifted to.

In this way, the hard disk drive 10 is set with a plurality of operation modes. The active head amplifiers 15-0 to 15-11 and the companion circuit 16 however are configured to judge which of the modes it is in from the changes in the potentials of the two signal lines SL1 and SL2 and operate in accordance with those results.

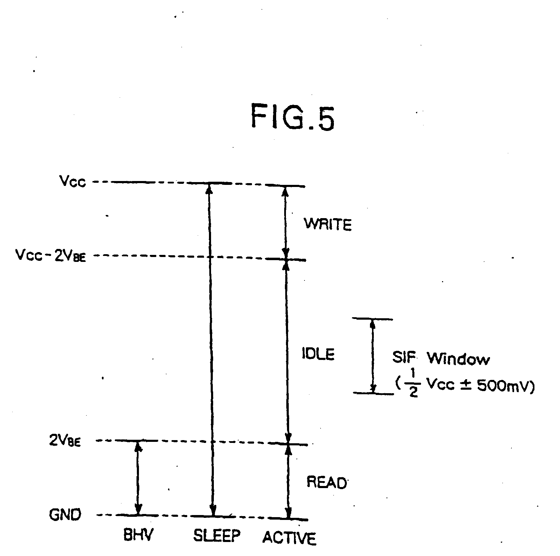

Figure 5 is a view for explaining the correspondence between the modes and the potentials of the signal lines.

As shown in Fig. 5, the V_{CC} to GND between the power supply voltage V_{CC} (5V) and the ground voltage GND is divided into levels in the ranges of V_{CC} to V_{CC}-2V_{BE} (including first level), V_{CC}-2V_{BE} to 2V_{BE} (+GND; third level), and 2V_{BE} to GND (including second level). V_{CC} to GND is defined as the sleep mode (in the present embodiment, as explained later, the GND level), V_{CC} to V_{CC}-2V_{BE} as the write mode, 2V_{BE} to GND as the read mode, and V_{CC}-2V_{BE} to 2V_{BE} as the idle mode (third mode). Further, in V_{CC}-2V_{BE} to 2V_{BE}, the range of 1/2 V_{CC} ± 500 mV is defined as the SIF window. Further, the input threshold voltage of the SIF is set to the 1/2 V_{CC}.

Further, the range of 2V_{BE} to GND is also used as the BHV mode.

Note that V_{BE} is the base-emitter voltage of a bipolar transistor and corresponds for example to 0.75V.

Below, an explanation will be given of the specific configuration and functions of the active head amplifier 15 (-0 to -11) and companion circuit 16 with reference to the drawings.

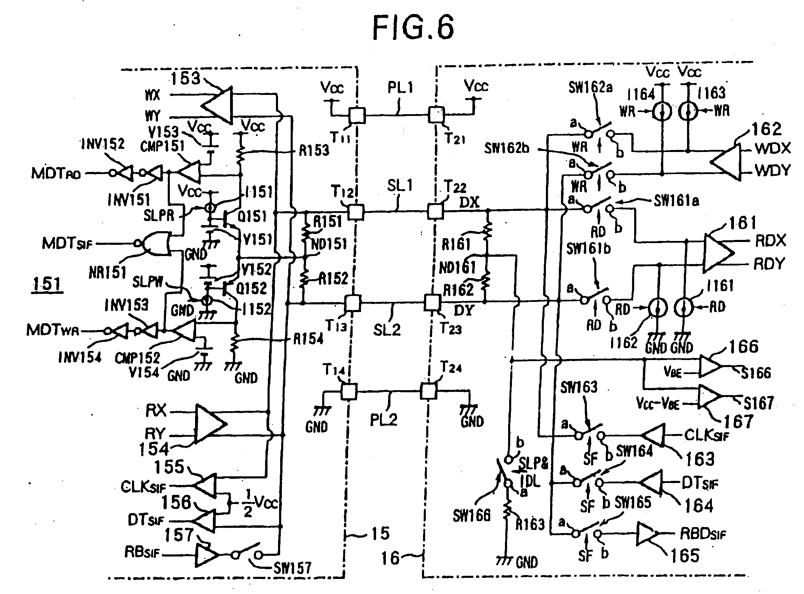

Figure 4 is a block diagram of the basic configuration of the active head amplifier 15 and companion circuit 16 according to an embodiment of the present invention. Figure 6 is a circuit diagram of an example of the configuration of the active head amplifier 15 and companion circuit 16 according to an embodiment of the present invention.

As shown in Fig. 4 and Fig. 6, an active head amplifier 15 is comprised of a mode detection/signal transmission circuit 151, a fault detection/BHV circuit 152 serving as a first fault detection circuit, a writer 153, a reader 154, and SIF signal drivers 155, 156, 157, and a switch circuit SW157 connecting an output of the SIF signal driver 157.

Further, the mode detection/signal transmission circuit 151 and the writer 153 comprise a second write system circuit, while the mode detection/signal transmission circuit 151 and the reader 154 comprise a second read system circuit.

Further the active head amplifier 15 has connection terminals T11 to T14, while the companion circuit 16 has connection terminals T21 to T24.

The connection terminal T11 of the active head amplifier 15 and the connection terminal T21 of the companion circuit 16 are connected by the power line PL1, the connection terminal T12 and the connection terminal T22 are connected by the signal line SL1, the connection terminal T13 and the connection terminal T23 are connected by the signal line SL2, and the connection terminal T14 and the connection terminal T24 are connected by the power line PL2.

In the active head amplifier 15, the connection terminal T12 to which the signal line SL1 is connected is connected to one of the input terminals of the writer 153, one of the output terminals of the reader 154, and one of the input terminals of the SIF driver 155.

Further, the connection terminal T13 to which the signal line SL2 is connected is connected to the other input terminal of the writer 153, the other output terminal of the reader 154, and the one input terminal of the SIF driver 156.

Further, the connection terminal T13 is connected to the output terminal of the SIF signal driver 156 through the switch circuit SW157.

The mode detection/signal transmission circuit 151 detects from the potentials of the two signal lines SL1 and SL2 connecting with the companion circuit 16 if the mode is the write mode, the read mode, the SIF mode, or the idle mode. A signal in accordance with the detected mode is transmitted through the signal lines SL1 and SL2 between the writer 153, reader 154, or SIF signal drivers 155, 156 and the companion circuit 16.

The mode detection/signal transmission circuit 151 specifically, as shown in Fig. 6, is comprised of an npn-type transistor Q151, a pnp-type transistor Q152, power supplies V151 to V154, resistance elements R151 to R154, current sources I151 and I152, comparators CMP151 and CMP152, a NOR gate NR151, and inverters INV151 to INV154.

The connection terminal T12 connected to the signal line SL1 and the connection terminal T13 connected to the signal line SL2 have connected between them in series the resistance elements R151 and R152. A node ND151 is constituted by the connection point of the same.

These resistance elements R151 and R152 have resistance values of several dozen ohms and function as terminating resistances.

The emitter of the npn-type transistor Q151 and the emitter of the pnp-type transistor Q152 are connected. The connection point is connected to the node ND151.

The base of the npn-type transistor Q151 is connected to the positive electrode side of the power supply V151 supplying a voltage of 3V_{BE}. Further, the connection point between the base of the transistor Q151 and the positive electrode side of the power supply V151 has connected to it for example a current source I152 controlled to turn on and off by a sleep signal SLPR by the fault detection/BHV circuit 152. Specifically, the current source I151 becomes inactive when the sleep signal SLPR is input.

The collector of the transistor Q151 is connected to the supply line of the power supply voltage V_{CC} through the resistance element R153 and is connected to one input terminal of the comparator CMP151.

The other input terminal of the comparator CMP151 is for example connected to the negative electrode side of the power supply V153 of for example about 1V. The positive electrode side of the power supply V153 is connected to the supply line of the power supply voltage V_{CC}.

Further, the output side of the comparator CMP151 has connected to it the serially connected inverters INV151 and INV152.

In this embodiment, the npn-type transistor Q151 is equivalently biased by a voltage 3V_{BE}. Therefore, the transistor Q151 becomes conductive (turns on) when the potential of the emitter, that is, the potential of the node ND151, becomes lower than 2V_{BE} and is held nonconductive (turned off) when the potential of the node ND151 is 2V_{BE} or more.

This embodiment is configured so that whether the mode is the read mode or not is detected through the comparator CMP151 depending on the conductive or nonconductive state of this npn-type transistor Q151.

Specifically, when the npn-type transistor Q151 is conductive, the collector potential of the transistor Q151, that is, the potential of one input terminal of the comparator CMP151, becomes about V_{CC}-2V, the potential of the one input terminal is lower than the potential V_{CC}-1V of the other input terminal connected to the power supply V153.

As a result, the output of the comparator CMP151 becomes a high level and the read mode detection signal DT_{RD} is output from the inverter INV152 at the active high level.

On the other hand, when the npn-type transistor Q151 is in the nonconductive state, the potential of the one input terminal of the comparator CMP151 receiving the collector potential of the transistor Q151 is held at about V_{CC}, the potential of the one input terminal is held higher than the potential V_{CC}-1V of the other input terminal connected to the power supply V153.

As a result, the output of the comparator CMP151 becomes a low level and the read mode detection signal DT_{RD} is output from the inverter INV152 at an inactive low level.

The base of the pnp-type transistor Q152 is equivalently connected to the negative electrode side of the power supply V152 supplying the voltage of 3V_{BE}. Further, the positive electrode side of the power supply V152 is connected to the line supplying the power supply voltage V_{CC}. Further, the connection point between the base of the transistor Q152 and the negative electrode side of the power supply V152 has connected to it for example a current source I152 controlled to turn on and off by the sleep signal SLPW by the fault detection/BHV circuit 152. Specifically, the current source I152 becomes inactive when the sleep signal SLPW is input.

The collector of the transistor Q152 is ground via the resistance element R154 and is connected to one input terminal of the comparator CMP152.

The other input terminal of the comparator CMP152 is connected to the positive electrode side of the power supply V154 of for example 1V. The negative electrode side of the power supply V154 is grounded.

The output side of the comparator CMP152 has connected to it the serially connected inverters INV153 and INV154.

In the present embodiment, the pnp-type transistor Q152 is biased by the voltage V_{CC}-3V_{BE}. Therefore, the transistor Q152 becomes conductive (turns on) when the potential of the emitter, that is, the potential of the node ND151, becomes higher than V_{CC}-2V_{BE} and is held nonconductive (turned off) when the potential of the node ND151 is less than V_{CC}-2V_{BE}.

The present embodiment is configured so as to detect whether the mode is the write mode or not through the comparator CMP152 by the conductive or nonconductive state of the npn-type transistor Q152.

Specifically, when the pnp-type transistor Q152 is conductive, the collector potential of the transistor Q152, that is, the potential of one of the input terminals of the comparator CMP152, becomes about 2V, the potential of the one input terminal is higher than the potential 1V of the other input terminal connected to the power supply V154 in the comparator CMP152.

As a result, the output of the comparator CMP152 becomes a high level and the write mode detection signal MDT_{WR} is output from the inverter INV154 at the active high level.

On the other hand, when the npn-type transistor is in the nonconductive state, the potential of the one input terminal of the comparator CMP151 receiving the collector potential of the transistor Q151 is held at about 0V, the potential of the one input terminal is held lower than the potential 1V of the other input terminal connected to the power supply V154 in the comparator CMP152.

As a result, the output of the comparator CMP152 becomes a low level and the write mode detection signal MDT_{WR} is output from the inverter INV154 at the inactive low level.

Further, one input terminal of the 2-input NOR gate NR151 is connected to the output terminal of the comparator CMP151, while the other input terminal is connected to the output terminal of the comparator CMP152.

The NOR gate NR151 outputs an SIF mode detection signal MDT_{SIF} at an active high level when the output of the comparator CMP151 is the low level (not the read mode) and the output of the comparator CMP152 is also the low level (not the write mode).

On the other hand, when the mode is the read mode or the write mode and one of the outputs of the comparators CMP151 and CMP152 is the high level, the NOR gate NR151 outputs the SIF mode detection signal MDT_{SIF} at the inactive low level.

The fault detection/BHV circuit 152 detects as a fault when an error has occurred in the normal read operation or write operation or a power abnormality has occurred, for example, the power supply voltage V_{CC} falls or the ground voltage GND becomes electrically open and outputs the fault FLT information. For example, if a state of fault occurs at the time of a normal write mode, it outputs the sleep signal SLPW to the current source I152 of the mode detection/signal transmission circuit 151, while if a state of fault occurs at the time of a normal read mode, it outputs the sleep signal SLPR to the current source I151 of the mode detection/signal transmission circuit 151.

Further, at the time of the BHV mode, the fault detection/BHV152 detects the direct current (DC) voltage across the reproduction head, that is, the GMR head, and sends this as a differential signal through the mode detection/signal transmission circuit 151 to the two signal lines SL1 and SL2.

The writer 153 receives the differential data DX, DY sent from the companion circuit 16 through the two signal lines SL1 and SL2 at the time of the write mode, amplifies them, and supplies them as the write data WX and WY to an induction-type head, that is, write head 123.

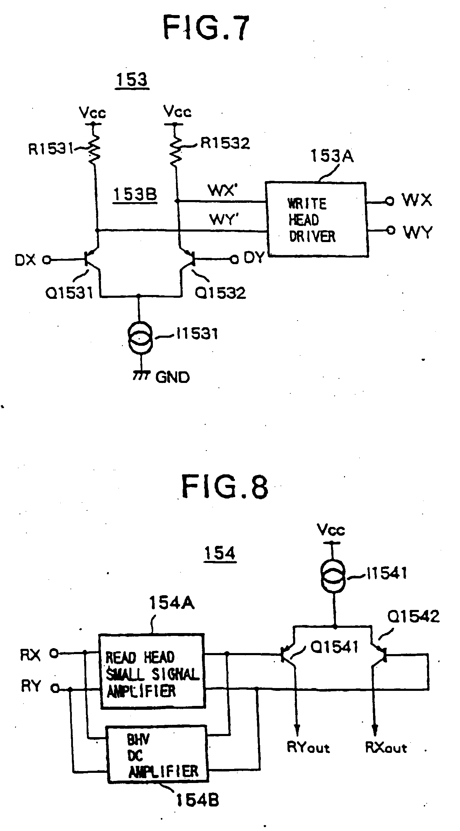

Figure 7 is a circuit diagram of an example of the configuration of the writer 153.

As shown in Fig. 7, the writer 153 is comprised of npn-type transistors Q1531, Q1532, resistance elements R1531, R1532, a current source I1531, and a write head driver 153A.

The emitters of the npn-type transistors Q1531 and Q1532 are connected. The connection point is connected to the current source I1531 to comprise a differential amplifier.

The base of the transistor Q1531 is connected to the connection terminal T12 and supplied with a differential signal DX sent over the signal line SL1, while the base of the transistor Q1532 is connected to the connection terminal T13 and supplied with the differential signal DY sent over the signal line SL2.

The collector of the transistor Q1531 is connected through the resistance element R1531 to the supply line of the power supply voltage V_{CC}, while the collector of the transistor Q1532 is connected through the resistance element R1532 to the supply line of the power supply voltage V_{CC}.

Write data WX and WY are output from the collectors of the transistor Q1531 and Q1532 via the write head driver 153A.

The reader 154 amplifies the read data RX and RY read from the GMR head, that is, the reproduction head 124, and sends the same through the mode detection/signal transmission circuit 151 over the signal lines SL1 and SL2 to the companion circuit 16.

Figure 8 is a circuit diagram of an example of the configuration of the reader 154.

As shown in Fig. 8, the reader 154 is comprised of a read head small signal amplifier 154A, a BHV DC amplifier 154B, pnp-type transistors Q1541 and Q1542 and a current source I1541.

The emitters of the pnp-type transistors Q1541 and Q1542 are connected. The connection point is connected to the current source I1541 connected to the supply line of the power supply voltage V_{CC} to comprise a differential amplifier.

The read data RX amplified by the read head small signal amplifier 154A is supplied to the base of the transistor Q1541, while the read data RY amplified by the read head small signal amplifier 154A is supplied to the base of the transistor Q1542.

Further, the read data RXout is output from the collector of the transistor Q1542, while the read data RYout is output from the collector of the note transistor Q1541.

Note that the BHV DC amplifier 154B is connected to the read head small signal amplifier 154A in parallel.

The SIF signal driver 155 is connected at one input terminal to the connection terminal T12 connected to the signal line SL1 and is connected at the other input terminal to the supply line of 1/2 V_{CC}. At the time of the SIF mode, it outputs after receiving the clock signal CLK_{SIF} sent over the signal line SL1.

The SIF signal driver 156 is connected at one input terminal to the connection terminal T13 connected to the signal line SL2 and is connected at the other input terminal to the supply line of 1/2 V_{CC}. At the time of the SIF mode, it outputs after receiving the SIF data DT_{SIF} sent over the signal line SL2. At the time of the read back, the switch circuit SW157 turns on and then the read back signal RB_{SIF} is sent to the signal line SL2.

The companion circuit 16, in response to mode signals sent from the R/W circuit 17, sets the potentials of the signal lines SL1 and SL2, sends the differential write signals to the signal lines SL1 and SL2, receives the differential read signals sent over the signal lines SL1 and SL2, sends the SIF clock CLK_{SIF} to the signal line SL1 at the time of the SIF mode, sends the SIF data DT_{SIF} to the signal line SL2, receives the SIF read back data sent over the signal line SL2, and detects idle/read faults and write faults based on fault information from an active head amplifier 15.

Note that the companion circuit 16 holds the potentials of the two signal lines SL1 and SL2 at a predetermined potential of the ground voltage GND from the power supply voltage V_{CC}, for example, GND through the high resistance, at the time of the sleep mode directly after power is turned on.

At the time of the sleep mode, as the current source I151 of the active head amplifier 15 is not active, the npn-type transistor Q151 is held in the off state. Therefore, the signal lines SL1 and SL2 are pulled down by the companion circuit 16, and the potentials of the signal lines SL1 and SL2 are held at GND.

At the time of the modes except the sleep mode, as the current sources I151 and I152 of the active head amplifier 15 are active, the companion circuit 16 become the idle mode, and the signal lines SL1 and SL2 are grounded through the resistance element R163. As a result, the transistor Q151 of the active head amplifier 15 becomes conductive and the potentials of the signal lines SL1 and SL2 increase. The resistance element R163 is a high resistance, since the potential of the signal lines SL1 and SL2 up to at about 2V_{BE}. At this time, the transistor Q151 does not become sufficient conductive state, so the potentials of the signal lines SL1 and SL2 are held at about 2V_{BE}. At this time, the potential of the collector of the transistor Q151 is held higher than V_{CC}-1V.

Further, it holds the potential of the two signal lines SL1 and SL2 at a predetermined potential from V_{CC}-2V_{BE} to 2V_{BE}, for example, about 2V_{BE} biased by the high resistance at the time of the idle mode.

The companion circuit 16 specifically, as shown in Fig. 6, is comprised of a read signal driver 161 serving as the first read system circuit, a write signal driver 162 serving as the first write system circuit, SIF drivers 163, 164, and 165, an idle/read fault detector 166 and write fault detector 167 serving as the second fault detection circuit, current sources I161 to I164, switch circuits SW161a, S161b, SW162a, SW162b, SW163 to SW166, and resistance elements R161 to R163.

Further, the switch circuits SW163 to SW166, and the resistance elements R161 to R163 comprise the mode setting circuit.

The companion circuit 16 has connected serially within in the resistance elements R161 and R162 between the connection terminal T22 connected to the signal line SL1 and the connection terminal T23 connected to the signal line SL2. The connection point constitutes the node ND161.

These resistance elements R161 and R162 have resistance values of several dozen ohms and function as terminating resistances.

The connection terminal T22 to which the signal line SL1 is connected is connected to the terminals a of the switch circuits SW161a, SW162a, SW163, while the connection terminal T23 to which the signal line SL2 is connected is connected to the terminals a of the switch circuit SW161b, SW162b and the terminals a of SW164 and SW165.

Further, the node ND161 is connected to one input terminal of the idle/read fault detector 166 and write fault detector 167 and the terminals b of the switch circuits SW166.

The switch circuit SW161a has terminals a and b held in a conductive state during the input of the read mode signal RD. The terminal b is connected to one input terminal of the read signal driver 161 and the current source I161 connected to the ground line.

The switch circuit SW161b has terminals a and b held in the conductive state during the input of the read mode signal RD. The terminal b is connected to the other input terminal of the read signal driver 161 and the current source I162 connected to the ground line.

The current sources I161 and I162 operate during the input of the read mode signal RD.

The switch circuit SW162a has terminals a and b held in a conductive state during the input of the write mode signal WR. The terminal b is connected to one output terminal of the write signal driver 162 and the current source I163 connected to the supply line of the power supply voltage V_{CC}.

The switch circuit SW162b has terminals a and b held in the conductive state during the input of the write mode signal WR. The terminal b is connected to the other output terminal of the write signal driver 162 and the current source I164 connected to the supply line of the power supply voltage V_{CC}.

The current sources I163 and I164 operate during the input of the write mode signal WR.

The switch circuit SW163 has the terminals a and b held in a conductive state during the input of the SIF mode signal SF. The terminal b is connected to the output terminal of the SIF clock use SIF driver 163.

The switch circuit SW164 has the terminals a and b held in a conductive state during the input of the SIF mode signal SF. The terminal b is connected to the output terminal of the SIF data use SIF driver 164. The switch circuit SW164 is held at the off state at the time of the SIF read back.

The switch circuit SW165 has the terminals a and b held in a conductive state during the input of the SIF mode signal SF. The terminal b is connected to the output terminal of the SIF read back data use SIF driver 165.

The switch circuit SW166 has the terminals a and b held in a conductive state during the input of the idle mode signal IDL. The terminal a is connected to one end of a resistance element R163 having a resistance value of several hundred kilohms. The other end of the resistance element R163 is grounded.

Due to this, at the time of the idle mode, the potentials of the signal lines SL1 and SL2 are held at about 2V_{BE}. In this case, the resistance element R163 is a high resistance, so only a very small current flows. As a result, the npn-type transistor Q151 of the mode detection/signal transmission circuit 151 of the active head amplifier 15 does not shift to the sufficient conductive state.

The switch circuit SW166 has terminals a and b held at the conductive state during the input of the sleep mode signal SPL. At the time of the sleep mode, the node ND161 is held at the GND through the resistance element R163.

The idle/read fault detector 166 is supplied at its other input terminal with a predetermined voltage, for example, V_{BE}. When the potential of the node ND161 becomes less than V_{BE} (outside second level range), it assumes that a fault has occurred at the idle mode or read mode and outputs a fault detection signal S166 to the controller 19.

The write fault detector 167 is supplied at its other input terminal with a predetermined voltage, for example, V_{CC}-V_{BE}. When the potential of the node ND161 becomes more than V_{CC}-V_{BE} (outside first level range), it assumes that a fault has occurred at the write mode and outputs a fault detection signal S167 to the controller 19.

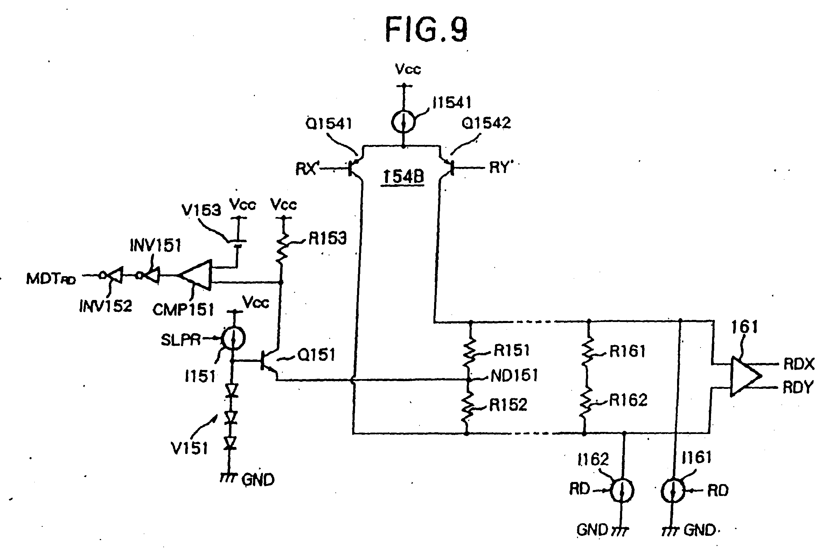

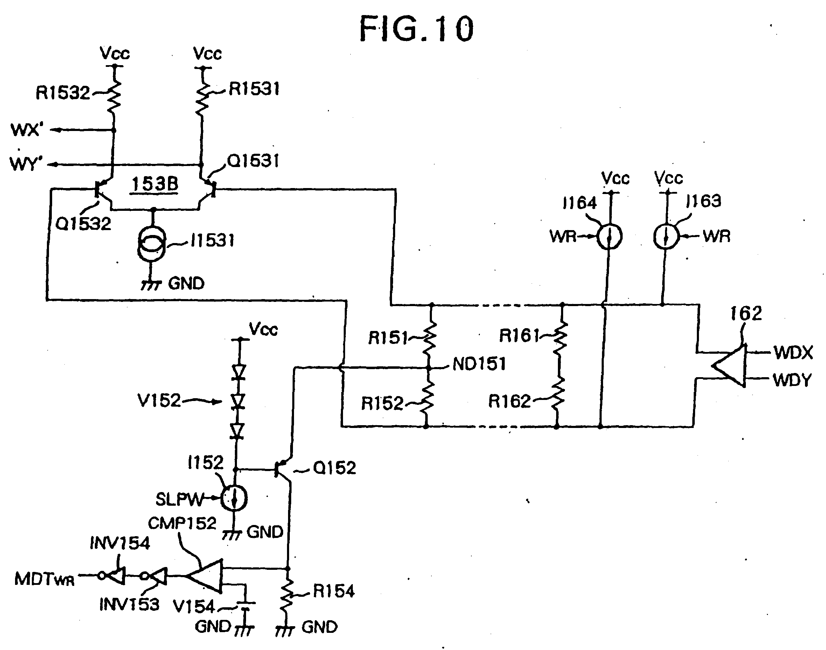

Next, an explanation will be made of the operation by the above configuration, focusing on the active head amplifier 15 and the companion circuit 16, with reference to Fig. 9 and Fig. 10.

Note that Fig. 9 is an equivalent circuit diagram for explaining the operation of the active head amplifier and companion circuit according to an embodiment of the present invention at the time of the read mode, while Fig. 10 is an equivalent circuit diagram for explaining the operation of the active head amplifier and companion circuit according to an embodiment of the present invention at the time of the write mode.

First, when the hard disk drive 10 is powered up, the active head amplifier 15 and the companion circuit 16 start at the sleep mode.

In the companion circuit 16, the sleep mode signal SLP is supplied to the switch circuit SW166 and the terminals a and b of the switch circuits SW166 are held in the conductive state. At the time of the sleep mode, the active head amplifier 15 is not active.

Due to this, the potential of the node ND161 becomes GND and the potential of the two signal lines SL1 and SL2 connecting the companion circuit 16 and the active head amplifier 15 are held at GND.

Next, for example, when shifting from the sleep mode to the idle mode, first an SIF signal SF is supplied from the controller 19 to the companion circuit 16 instead of the sleep mode signal SLP.

In the companion circuit 16, the SIF signal SF is supplied to the switch circuits SW163 and SW164 and the terminals a and b of the switch circuits SW163 and SW164 are held in the conductive state.

Due to this, the SIF clock CLK_{SIF} is sent to the signal line SL1 by the SIF clock use SIF driver 163 and SIF data DT_{SIF} indicating that the mode is the idle mode is sent to the signal line SL2 by the SIF data use SIF driver 164.

The SIF clock sent over the signal line SL1 and the SIF data sent over the signal line SL2 are supplied through the mode detection/signal transmission circuit 161 of the active head amplifier 15 to the SIF signal drivers 155 and 156, respectively.

In the SIF drivers 155 and 156, the input SIF clock and SIF data are compared with 1/2 V_{CC} and the SIF clock CLK_{SIF} and SIF data DT_{SIF} are reproduced and output to a not shown active head side mode switching circuit.

Next, an idle signal IDL is supplied from the controller 19 to the companion circuit 16 instead of the SIF mode signal SF.

In the companion circuit 16, the idle signal IDL is supplied to the switch circuit SW166 and the terminals a and b of the switch circuit SW166 are held in the conductive state.

Due to this, the potential of the node ND161 is held at about 2V_{BE}. The potentials of the two signal lines SL1 and SL2 connecting the companion circuit 16 and the active head amplifier 15 becomes about 2V_{BE}.

At this time, the resistance element R163 is a high resistance, so only a very small current flows. As a result, the npn-type transistor Q151 of the mode detection/signal transmission circuit 151 of the active head amplifier 15 does not shift to the sufficient conductive state and is held stably at the idle mode.

Further, in the idle state, since the potentials of the two signal lines SL1 and SL2 connecting the companion circuit 16 and the active head amplifier 15 are held at about 2V_{BE}, the pnp-type transistor Q152 of the mode detection/signal transmission circuit 151 of the active head amplifier 15 is held at the nonconductive state.

As a result, the outputs of the comparators CMP151 and CMP152 of the mode detection/signal transmission circuit 151 of the active head amplifier 15 become the low level and the output of the NOR gate NR151 becomes the high level, that is, the SIF mode detection signal DT_{SIF} is active and is output to the not shown active head side mode switching circuit.

In the idle state, if there is a read request from a not shown host computer for example, this read request is input through the interface (SCSI) 20 to the controller 19.

Next, a read mode signal RD is supplied from the controller 19 to the companion circuit 16 instead of the idle signal IDL.

In the companion circuit 16, the read mode signal RD is supplied to the switch circuits SW161a and SW161b and the current sources I161 and I162.

Due to this, the terminals a and b of the switch circuits SW161a and SW161b are held in the conductive state and the current sources I161 and I162 are in the operating state.

Along with the switch circuits SW161a and SW161b being held in the conductive state or the current sources I161 and I162 becoming operational, the signal lines SL1 and SLS2 are drawn to the ground side by a large current of several mA to a dozen odd mA by the current sources I161 and I162.

As a result, the potential of the node ND151 of the active head amplifier 15 starts to become lower than 2V_{BE}.

By the potential of the node ND151 starting to become lower than 2V_{BE} (1.5V), the npn-type transistor Q151 with an emitter connected to the node ND151 and with a base equivalently biased by 3V_{BE} shifts from the nonconductive to the conductive state.

Further, the potential of the node ND151 at this time shifts to for example about 1.25V.

Along with the npn-type transistor Q151 shifting to the conductive state, the collector potential of the transistor Q151, that is, the potential of one input terminal of the comparator CMP151, becomes about V_{CC}-2V, the potential of the one input terminal becomes lower than the potential V_{CC}-1V of the other input terminal connected to the power supply V153.

As a result, the output of the comparator 151 becomes a high level and a read mode detection signal MDT_{RD} is output from the inverter INV152 at an active high level to a not shown active head side mode switching circuit.

Due to this, at the active head side confirming the mode is the read mode, data is read out from a predetermined track by a head designated by the SIF data.

The read data RX and RY are supplied to the reader 154 comprised by the differential amplifier where they are amplified and sent through the mode detection/signal transmission circuit 151 over the signal lines SL1 and SL2 to the companion circuit 16.

Note that, the voltage levels of signals sent over the signal lines SL1 and SL2 are set to within the predetermined potential between 2V_{BE} and GND.

The read data RX and RY input to the companion circuit 16 are supplied to the read signal driver 161 and output as the differential read data RDX and RDY to the R/W circuit 17.

The read data is subjected to predetermined processing at the R/W circuit 17 and then sent through the controller 19 and interface (SCSI) 20 to a not shown host computer side.

Further, when a fault is detected at the fault/BHV circuit 152 of the active head amplifier 15 at the time of the above normal read mode operation, a sleep signal SLPR is supplied to the current source I151 of the mode detection/signal transmission circuit 151.

Due to this, the current source I151 becomes nonoperational and the base potential of the npn-type transistor Q151 falls to the ground voltage GND level.

The transistor 151 becomes nonconductive along with the base potential falling to the ground voltage GND level and the potential of the node ND151 becomes a level lower than V_{BE}. Therefore, the potential of the node ND161 of the companion circuit 16 also becomes less than V_{BE}.

As a result, the idle/read fault detector 166 judges that a fault has occurred in the read mode due to the potential of the node ND161 falling lower than the predetermined voltage V_{BE}, generates a fault detection signal S155, and outputs it to the controller 19.

Further, when a write mode operation is to be performed after the normal read mode operation, the mode shifts directly to the write mode without going through the idle mode.

In this case, if there is a write request from a not shown host computer for example, this write request is input through the interface (SCSI) 20 to the controller 19.

Next, a write mode signal WR is supplied from the controller 19 to the companion circuit 16 instead of the read mode signal RD.

In the companion circuit 16, the write mode signal WR is supplied to the switch circuits SW162a and SW162b and the current sources I163 and I164.

Due to this, the terminals a and b of the switch circuits SW162a and SW162b are held in the conductive state and the current sources I163 and I164 become operational.

Along with the switch circuits SW162a and SW162b being held in the conductive state or the current sources I163 and I164 becoming operational, the signal lines SL1 and SLS2 are supplied with a large current of several mA to a dozen odd mA from the current sources I163 and I164.

As a result, the potential of the node ND151 of the active head amplifier 15 starts to become higher than V_{CC}-2V_{BE}.

By the potential of the node ND151 starting to become higher than V_{CC}-2V_{BE} (for example, 3.5V), the pnp-type transistor Q152 with an emitter connected to the node ND151 and with a base equivalently biased by V_{CC}-3V_{BE} shifts from the nonconductive to the conductive state.

Along with the pnp-type transistor Q152 shifting to the conductive state, the collector potential of the transistor Q152, that is, the potential of one input terminal of the comparator CMP152, becomes about 2V, the potential of the one input terminal becomes higher than the potential of the other input terminal connected to the power supply V154 in the comparator CMP152.

As a result, the output of the comparator 152 becomes a high level and a write mode detection signal MDT_{WR} is output from the inverter INV154 at an active high level to a not shown active head side mode switching circuit.

Further, the differential write data WDX and WDY are supplied from the R/W circuit 17 to the write signal driver 162 and sent over the signal lines SL1 and SL2 to the active head amplifier 15.

At this time, the voltage levels of signals sent over the signal lines SL1 and SL2 are set to within the predetermined potential between V_{CC} and V_{CC}-2V_{BE}.

The write data WDX and WDY input to the active head amplifier 15 are supplied to the writer 153 comprised by the differential amplifier and are supplied as the differential write data WX, WY to an induction type write head 123 for writing of data.

Further, when the fault/BHV circuit 152 of the active head amplifier 15 detects a fault at the time of the above normal write mode operation, a sleep signal SLPW is supplied to the current source I152 of the mode detection/signal transmission circuit 151.

Due to this, the current source I152 becomes nonoperational and the base potential of the pnp-type transistor Q152 raises to the power supply voltage V_{CC} level.

Along with the base potential rising to the power supply voltage V_{CC} level, the transistor Q152 becomes nonconductive and the potential of the node ND151 rises to close to V_{CC}. Therefore, the potential of the node ND161 of the companion circuit 16 also rises to close to V_{CC}.

As a result, the write fault detector 167 judges that a fault has occurred by the potential of the node ND161 becoming higher than a predetermined voltage V_{CC}-V_{BE}, generates a fault detection signal S167, and outputs it to the controller 19.

Further, a fault in the idle mode occurs when there is an abnormality in the power supply voltage.

In this case, the potential of the node ND161 of the companion circuit 16 falls from the state of the held 2V_{BE} to the ground voltage GND level.

As a result, the idle/read fault detector 166 judges that a fault has occurred at the time of idling by the potential of the node ND161 becoming lower than the predetermined voltage V_{BE}, generates a fault detection signal S166, and outputs it to the controller 19.

Note that when the above fault occurs, the active head side shifts to the sleep mode.

As explained above, according to embodiments of the the present invention, since provision is made of a companion circuit 16 which, in response to mode signals sent from the controller 19, sets the potentials of the signal lines SL1 and SL2, sends the differential write signals to the signal lines SL1 and SL2, receives the differential read signals sent over the signal lines SL1 and SL2, sends the SIF clock CLK_{SIF} to the signal line SL1 at the time of the SIF mode, sends the SIF data DT_{SIF} to the signal line SL2, receives the SIF read back data sent over the signal line SL1, and detects idle/read faults and write faults based on fault information from an active head amplifier 15 and an active head amplifier 15 which judges the operation mode from the potentials of the signal lines SL1 and SL2, supplies a write signal to the write head 123 at the time of the write mode, reads data by a reproduction head 124 and sends it to the signal lines SL1 and SL2 at the time of the read mode, and makes the potentials of the signal lines SL1 and SL2 shift to outside the potential levels of the signal lines set for each mode when there is a fault at the time of the write, read, or idle mode (generates fault information), just two signal lines are enough as compared with the eight to 10 in the related art.

Therefore, the wiring connecting the active head amplifier 15 including the writer 153 and the reader 154 with the companion circuit 16 may consist of only a total of four lines, that is, the two signal lines SL1 and SL2 and the power lines PL1 and PL2 for the power supply voltage V_{CC} and the ground voltage GND, and between wiring even in the connection with the companion circuit 16 becomes possible sufficiently.

Due to this, the active head amplifier 15 can be arranged close to the head, and the total inductance due to the wiring can be reduced.

As a result, the rising edge and the trailing edge of the write current can be made sharp and therefore the write operation can be made higher in speed. Further, it becomes possible to increase the band width of the read system and therefore the reproduction can be made higher in speed.

Note that in this embodiment, the explanation was made of the case where the V_{CC} to GND is defined as the sleep mode, V_{CC} to V_{CC}-2V_{BE} as the write mode, 2V_{BE} to GND as the read mode, and V_{CC}-2V_{BE} to 2V_{BE} as the idle mode and, further, in V_{CC}-2V_{BE} to 2V_{BE}, the range of 1/2 V_{CC} ± 500 mV is defined as the SIF window and the range of 2V_{BE} to GND as the BHV mode, but aspects of the invention are not limited to this. For example, it is of course also possible to for example made V_{CC} to V_{CC}-2V_{BE} the read mode and make 2V_{BE} to GND the write mode.

Summarizing the advantageous effects of embodiments of the present invention, according to such embodiments, there are the advantages that it is possible to inhibit the length of the signal lines from effecting the write and read properties and prevent deterioration of properties along with an increase in the transfer rate.

While examples of the invention have been described with reference to specific embodiments chosen for purposes of illustration, it should be apparent that numerous modifications could be made thereto by those skilled in the art without departing from the basic concept and scope of the invention.

The scope of the present disclosure includes any novel feature or combination of features disclosed therein either explicitly or implicitly or any generalisation thereof irrespective of whether or not it relates to the claimed invention or mitigates any or all of the problems addressed by the present invention. The applicant hereby gives notice that new claims may be formulated to such features during the prosecution of this application or of any such further application derived therefrom. In particular, with reference to the appended claims, features from dependent claims may be combined with those of the independent claims and features from respective independent claims may be combined in any appropriate manner and not merely in the specific combinations enumerated in the claims.

## Claims

1. An information recording and reproduction apparatus having at least a write mode and a read mode, comprising:
a recording medium;
a head for writing data on the recording medium upon receiving a write signal in the write mode and for reading data recorded on the recording medium in the read mode;
a signal line;
a first circuit having a first write system circuit for setting the potential of the signal line to within a predetermined first level range and sending a write signal to the signal line at the time of the write mode and a first read system circuit for setting the potential of the signal line to within a second level range different from the first level range and receiving read data sent over the signal line at the time of the read mode; and
a second circuit having a second write system circuit for judging that the mode is the write mode when the potential of the signal line is within the first level range and supplying the write signal sent over the signal line by the first circuit to the head and a second read system circuit for judging that the mode is the read mode when the potential of the signal line is within the second level range, reading the data recorded on the recording medium by the head, and sending the read data to the signal line to send it to the first circuit.

2. An information recording and reproduction apparatus as set forth in claim 1, wherein
the head is provided at a predetermined position of an arm and
the second circuit is provided near the position of arrangement of the head at the arm.

3. An information recording and reproduction apparatus as set forth in claim 1, wherein
the first circuit has a mode setting circuit for setting the potential of the signal line to within a third level range different from the first and second level ranges and
the second circuit has a circuit for judging that the mode is a third mode when the potential level of the signal line is within the third level range.

4. An information recording and reproduction apparatus as set forth in claim 2, wherein
the first circuit has a mode setting circuit for setting the potential of the signal line to within a third level range different from the first and second level ranges and
the second circuit has a circuit for judging that the mode is a third mode when the potential level of the signal line is within the third level range.

5. An information recording and reproduction apparatus as set forth in claim 3, wherein
the first circuit has a second mode setting circuit for setting the potential of the signal line to within a fourth level range including within the first, second, and third level ranges and
the second circuit has a circuit for judging that the mode is a fourth mode when the potential of the signal line is within the fourth level range.

6. An information recording and reproduction apparatus as set forth in claim 4, wherein
the first circuit has a second mode setting circuit for setting the potential of the signal line to within a fourth level range including within the first, second, and third level ranges and
the second circuit has a circuit for judging that the mode is a fourth mode when the potential of the signal line is within the fourth level range.

7. An information recording and reproduction apparatus as set forth in claim 1, wherein
the second circuit has a first fault detection circuit for making the potential of the signal line shift outside the first level range when a fault occurs in the write mode and
the first circuit has a second fault detection circuit for generating a fault detection signal indicating that a fault has occurred in the write mode when the potential level of the signal line has shifted to outside the first level range regardless of it having to be within the first level range.

8. An information recording and reproduction apparatus as set forth in claim 2, wherein
the second circuit has a first fault detection circuit for making the potential of the signal line shift outside the first level range when a fault occurs in the write mode and
the first circuit has a second fault detection circuit for generating a fault detection signal indicating that a fault has occurred in the write mode when the potential level of the signal line has shifted to outside the first level range regardless of it having to be within the first level range.

9. An information recording and reproduction apparatus as set forth in claim 3, wherein
the second circuit has a first fault detection circuit for making the potential of the signal line shift outside the first level range when a fault occurs in the write mode and
the first circuit has a second fault detection circuit for generating a fault detection signal indicating that a fault has occurred in the write mode when the potential level of the signal line has shifted to outside the first level range regardless of it having to be within the first level range.

10. An information recording and reproduction apparatus as set forth in claim 4, wherein
the second circuit has a first fault detection circuit for making the potential of the signal line shift outside the first level range when a fault occurs in the write mode and
the first circuit has a second fault detection circuit for generating a fault detection signal indicating that a fault has occurred in the write mode when the potential level of the signal line has shifted to outside the first level range regardless of it having to be within the first level range.

11. An information recording and reproduction apparatus as set forth in claim 5, wherein
the second circuit has a first fault detection circuit for making the potential of the signal line shift outside the first level range when a fault occurs in the write mode and
the first circuit has a second fault detection circuit for generating a fault detection signal indicating that a fault has occurred in the write mode when the potential level of the signal line has shifted to outside the first level range regardless of it having to be within the first level range.

12. An information recording and reproduction apparatus as set forth in claim 6, wherein
the second circuit has a first fault detection circuit for making the potential of the signal line shift outside the first level range when a fault occurs in the write mode and
the first circuit has a second fault detection circuit for generating a fault detection signal indicating that a fault has occurred in the write mode when the potential level of the signal line has shifted to outside the first level range regardless of it having to be within the first level range.

13. An information recording and reproduction apparatus as set forth in claim 1, wherein
the second circuit has a first fault detection circuit for making the potential of the signal line shift outside the second level range when a fault occurs in the read mode and
the first circuit has a second fault detection circuit for generating a fault detection signal indicating that a fault has occurred in the read mode when the potential level of the signal line has shifted to outside the second level range regardless of it having to be within the second level range.

14. An information recording and reproduction apparatus as set forth in claim 2, wherein
the second circuit has a first fault detection circuit for making the potential of the signal line shift outside the second level range when a fault occurs in the read mode and
the first circuit has a second fault detection circuit for generating a fault detection signal indicating that a fault has occurred in the read mode when the potential level of the signal line has shifted to outside the second level range regardless of it having to be within the second level range.

15. An information recording and reproduction apparatus as set forth in claim 3, wherein
the second circuit has a first fault detection circuit for making the potential of the signal line shift outside the second level range when a fault occurs in the read mode and
the first circuit has a second fault detection circuit for generating a fault detection signal indicating that a fault has occurred in the read mode when the potential level of the signal line has shifted to outside the second level range regardless of it having to be within the second level range.

16. An information recording and reproduction apparatus as set forth in claim 4, wherein
the second circuit has a first fault detection circuit for making the potential of the signal line shift outside the second level range when a fault occurs in the read mode and
the first circuit has a second fault detection circuit for generating a fault detection signal indicating that a fault has occurred in the read mode when the potential level of the signal line has shifted to outside the second level range regardless of it having to be within the second level range.

17. An information recording and reproduction apparatus as set forth in claim 5, wherein
the second circuit has a first fault detection circuit for making the potential of the signal line shift outside the second level range when a fault occurs in the read mode and
the first circuit has a second fault detection circuit for generating a fault detection signal indicating that a fault has occurred in the read mode when the potential level of the signal line has shifted to outside the second level range regardless of it having to be within the second level range.

18. An information recording and reproduction apparatus as set forth in claim 6, wherein
the second circuit has a first fault detection circuit for making the potential of the signal line shift outside the second level range when a fault occurs in the read mode and
the first circuit has a second fault detection circuit for generating a fault detection signal indicating that a fault has occurred in the read mode when the potential level of the signal line has shifted to outside the second level range regardless of it having to be within the second level range.

19. An information recording and reproduction apparatus as set forth in claim 7, wherein
the second circuit has a third fault detection circuit for making the potential of the signal line shift outside the second level range when a fault occurs in the read mode and
the first circuit has a fourth fault detection circuit for generating a fault detection signal indicating that a fault has occurred in the read mode when the potential level of the signal line has shifted to outside the second level range regardless of it having to be within the second level range.

20. An information recording and reproduction apparatus as set forth in claim 8, wherein
the second circuit has a third fault detection circuit for making the potential of the signal line shift outside the second level range when a fault occurs in the read mode and
the first circuit has a fourth fault detection circuit for generating a fault detection signal indicating that a fault has occurred in the read mode when the potential level of the signal line has shifted to outside the second level range regardless of it having to be within the second level range.

21. An information recording and reproduction apparatus as set forth in claim 9, wherein
the second circuit has a third fault detection circuit for making the potential of the signal line shift outside the second level range when a fault occurs in the read mode and
the first circuit has a fourth fault detection circuit for generating a fault detection signal indicating that a fault has occurred in the read mode when the potential level of the signal line has shifted to outside the second level range regardless of it having to be within the second level range.

22. An information recording and reproduction apparatus as set forth in claim 10, wherein
the second circuit has a third fault detection circuit for making the potential of the signal line shift outside the second level range when a fault occurs in the read mode and
the first circuit has a fourth fault detection circuit for generating a fault detection signal indicating that a fault has occurred in the read mode when the potential level of the signal line has shifted to outside the second level range regardless of it having to be within the second level range.

23. An information recording and reproduction apparatus as set forth in claim 11, wherein
the second circuit has a third fault detection circuit for making the potential of the signal line shift outside the second level range when a fault occurs in the read mode and
the first circuit has a fourth fault detection circuit for generating a fault detection signal indicating that a fault has occurred in the read mode when the potential level of the signal line has shifted to outside the second level range regardless of it having to be within the second level range.

24. An information recording and reproduction apparatus as set forth in claim 12, wherein
the second circuit has a third fault detection circuit for making the potential of the signal line shift outside the second level range when a fault occurs in the read mode and
the first circuit has a fourth fault detection circuit for generating a fault detection signal indicating that a fault has occurred in the read mode when the potential level of the signal line has shifted to outside the second level range regardless of it having to be within the second level range.

25. An information recording and reproduction apparatus as set forth in claim 3, wherein
the second circuit has a first fault detection circuit for making the potential of the signal line shift outside the third level range when a fault occurs in the third mode and
the first circuit has a second fault detection circuit for generating a fault detection signal indicating that a fault has occurred in the third mode when the potential level of the signal line has shifted to outside the third level range regardless of it having to be within the third level range.

26. An information recording and reproduction apparatus as set forth in claim 4, wherein
the second circuit has a first fault detection circuit for making the potential of the signal line shift outside the third level range when a fault occurs in the third mode and
the first circuit has a second fault detection circuit for generating a fault detection signal indicating that a fault has occurred in the third mode when the potential level of the signal line has shifted to outside the third level range regardless of it having to be within the third level range.

27. An information recording and reproduction apparatus as set forth in claim 5, wherein
the second circuit has a first fault detection circuit for making the potential of the signal line shift outside the third level range when a fault occurs in the third mode and
the first circuit has a second fault detection circuit for generating a fault detection signal indicating that a fault has occurred in the third mode when the potential level of the signal line has shifted to outside the third level range regardless of it having to be within the third level range.

28. An information recording and reproduction apparatus as set forth in claim 6, wherein
the second circuit has a first fault detection circuit for making the potential of the signal line shift outside the third level range when a fault occurs in the third mode and
the first circuit has a second fault detection circuit for generating a fault detection signal indicating that a fault has occurred in the third mode when the potential level of the signal line has shifted to outside the third level range regardless of it having to be within the third level range.

29. An information recording and reproduction apparatus as set forth in claim 7, wherein
the second circuit has a third fault detection circuit for making the potential of the signal line shift outside the third level range when a fault occurs in the third mode and
the first circuit has a fourth fault detection circuit for generating a fault detection signal indicating that a fault has occurred in the third mode when the potential level of the signal line has shifted to outside the third level range regardless of it having to be within the third level range.

30. An information recording and reproduction apparatus as set forth in claim 8, wherein
the second circuit has a third fault detection circuit for making the potential of the signal line shift outside the third level range when a fault occurs in the third mode and
the first circuit has a fourth fault detection circuit for generating a fault detection signal indicating that a fault has occurred in the third mode when the potential level of the signal line has shifted to outside the third level range regardless of it having to be within the third level range.

31. An information recording and reproduction apparatus as set forth in claim 9, wherein
the second circuit has a third fault detection circuit for making the potential of the signal line shift outside the third level range when a fault occurs in the third mode and
the first circuit has a fourth fault detection circuit for generating a fault detection signal indicating that a fault has occurred in the third mode when the potential level of the signal line has shifted to outside the third level range regardless of it having to be within the third level range.

32. An information recording and reproduction apparatus as set forth in claim 10, wherein
the second circuit has a third fault detection circuit for making the potential of the signal line shift outside the third level range when a fault occurs in the third mode and
the first circuit has a fourth fault detection circuit for generating a fault detection signal indicating that a fault has occurred in the third mode when the potential level of the signal line has shifted to outside the third level range regardless of it having to be within the third level range.

33. An information recording and reproduction apparatus as set forth in claim 11, wherein
the second circuit has a third fault detection circuit for making the potential of the signal line shift outside the third level range when a fault occurs in the third mode and
the first circuit has a fourth fault detection circuit for generating a fault detection signal indicating that a fault has occurred in the third mode when the potential level of the signal line has shifted to outside the third level range regardless of it having to be within the third level range.

34. An information recording and reproduction apparatus as set forth in claim 12, wherein
the second circuit has a third fault detection circuit for making the potential of the signal line shift outside the third level range when a fault occurs in the third mode and
the first circuit has a fourth fault detection circuit for generating a fault detection signal indicating that a fault has occurred in the third mode when the potential level of the signal line has shifted to outside the third level range regardless of it having to be within the third level range.

35. An information recording and reproduction apparatus as set forth in claim 13, wherein
the second circuit has a third fault detection circuit for making the potential of the signal line shift outside the third level range when a fault occurs in the third mode and
the first circuit has a fourth fault detection circuit for generating a fault detection signal indicating that a fault has occurred in the third mode when the potential level of the signal line has shifted to outside the third level range regardless of it having to be within the third level range.

36. An information recording and reproduction apparatus as set forth in claim 14, wherein
the second circuit has a third fault detection circuit for making the potential of the signal line shift outside the third level range when a fault occurs in the third mode and
the first circuit has a fourth fault detection circuit for generating a fault detection signal indicating that a fault has occurred in the third mode when the potential level of the signal line has shifted to outside the third level range regardless of it having to be within the third level range.

37. An information recording and reproduction apparatus as set forth in claim 15 wherein
the second circuit has a third fault detection circuit for making the potential of the signal line shift outside the third level range when a fault occurs in the third mode and
the first circuit has a fourth fault detection circuit for generating a fault detection signal indicating that a fault has occurred in the third mode when the potential level of the signal line has shifted to outside the third level range regardless of it having to be within the third level range.

38. An information recording and reproduction apparatus as set forth in claim 16, wherein
the second circuit has a third fault detection circuit for making the potential of the signal line shift outside the third level range when a fault occurs in the third mode and
the first circuit has a fourth fault detection circuit for generating a fault detection signal indicating that a fault has occurred in the third mode when the potential level of the signal line has shifted to outside the third level range regardless of it having to be within the third level range.

39. An information recording and reproduction apparatus as set forth in claim 17, wherein
the second circuit has a third fault detection circuit for making the potential of the signal line shift outside the third level range when a fault occurs in the third mode and
the first circuit has a fourth fault detection circuit for generating a fault detection signal indicating that a fault has occurred in the third mode when the potential level of the signal line has shifted to outside the third level range regardless of it having to be within the third level range.

40. An information recording and reproduction apparatus as set forth in claim 18, wherein
the second circuit has a third fault detection circuit for making the potential of the signal line shift outside the third level range when a fault occurs in the third mode and
the first circuit has a fourth fault detection circuit for generating a fault detection signal indicating that a fault has occurred in the third mode when the potential level of the signal line has shifted to outside the third level range regardless of it having to be within the third level range.

41. An information recording and reproduction apparatus as set forth in claim 19, wherein
the second circuit has a fifth fault detection circuit for making the potential of the signal line shift outside the third level range when a fault occurs in the third mode and
the first circuit has a sixth fault detection circuit for generating a fault detection signal indicating that a fault has occurred in the third mode when the potential level of the signal line has shifted to outside the third level range regardless of it having to be within the third level range.

42. An information recording and reproduction apparatus as set forth in claim 20, wherein
the second circuit has a fifth fault detection circuit for making the potential of the signal line shift outside the third level range when a fault occurs in the third mode and
the first circuit has a sixth fault detection circuit for generating a fault detection signal indicating that a fault has occurred in the third mode when the potential level of the signal line has shifted to outside the third level range regardless of it having to be within the third level range.

43. An information recording and reproduction apparatus as set forth in claim 21, wherein
the second circuit has a fifth fault detection circuit for making the potential of the signal line shift outside the third level range when a fault occurs in the third mode and
the first circuit has a sixth fault detection circuit for generating a fault detection signal indicating that a fault has occurred in the third mode when the potential level of the signal line has shifted to outside the third level range regardless of it having to be within the third level range.

44. An information recording and reproduction apparatus as set forth in claim 22, wherein
the second circuit has a fifth fault detection circuit for making the potential of the signal line shift outside the third level range when a fault occurs in the third mode and
the first circuit has a sixth fault detection circuit for generating a fault detection signal indicating that a fault has occurred in the third mode when the potential level of the signal line has shifted to outside the third level range regardless of it having to be within the third level range.

45. An information recording and reproduction apparatus as set forth in claim 23, wherein
the second circuit has a fifth fault detection circuit for making the potential of the signal line shift outside the third level range when a fault occurs in the third mode and
the first circuit has a sixth fault detection circuit for generating a fault detection signal indicating that a fault has occurred in the third mode when the potential level of the signal line has shifted to outside the third level range regardless of it having to be within the third level range.

46. An information recording and reproduction apparatus as set forth in claim 24, wherein
the second circuit has a fifth fault detection circuit for making the potential of the signal line shift outside the third level range when a fault occurs in the third mode and
the first circuit has a sixth fault detection circuit for generating a fault detection signal indicating that a fault has occurred in the third mode when the potential level of the signal line has shifted to outside the third level range regardless of it having to be within the third level range.

47. A disk drive having at least a write mode and a read mode, comprising:
a disk assembly unit comprising coaxially arranged disks on which are formed tracks on which data is recorded and rotated at a predetermined rotational speed;
a head assembly unit having a plurality of heads provided corresponding to the track formation surfaces of the disk media of the disk assembly unit, receiving write signals and writing data on the disk media at the time of the write mode, and reading data recorded on the disk media at the time of the read mode;
a head drive system for controlling the movement of the heads of the head assembly unit in the radial direction of the disk media of the disk assembly unit to position them at the desired locations;
one or two signal lines;
a companion circuit having a first write system circuit for setting the potential of the signal line to within a predetermined first level range and sending a write signal to the signal line at the time of the write mode and a first read system circuit for setting the potential of the signal line to within a second level range different from the first level range and receiving read data sent over the signal line at the time of the read mode; and
an active head circuit having a second write system circuit for judging that the mode is the write mode when the potential of the signal line is within the first level range and supplying the write signal sent over the signal line by the companion circuit to a head and a second read system circuit for judging that the mode is the read mode when the potential of the signal line is within the second level range, reading the data recorded on a recording medium by a head, and sending the read data to the signal line to send it to the companion circuit.

48. A disk drive as set forth in claim 47, wherein a differential write signal or read data are sent to the two signal lines.

49. A disk drive as set forth in claim 47, wherein
a head is provided at a predetermined position at the front end of an arm and
the active head circuit is provided near the position of arrangement of the head at the arm.

50. A disk drive as set forth in claim 48, wherein
a head is provided at a predetermined position at the front end of an arm and
the active head circuit is provided near the position of arrangement of the head at the arm.

51. A disk drive as set forth in claim 47, wherein
the companion circuit has a mode setting circuit for setting the potential of the signal line to within a third level range different from the first and second level ranges and
the active head circuit has a circuit for judging that the mode is a third mode when the potential level of the signal line is within the third level range.

52. A disk drive as set forth in claim 48, wherein
the companion circuit has a mode setting circuit for setting the potential of the signal line to within a third level range different from the first and second level ranges and
the active head circuit has a circuit for judging that the mode is a third mode when the potential level of the signal line is within the third level range.

53. A disk drive as set forth in claim 49, wherein
the companion circuit has a mode setting circuit for setting the potential of the signal line to within a third level range different from the first and second level ranges and
the active head circuit has a circuit for judging that the mode is a third mode when the potential level of the signal line is within the third level range.

54. A disk drive as set forth in claim 50, wherein
the companion circuit has a mode setting circuit for setting the potential of the signal line to within a third level range different from the first and second level ranges and
the active head circuit has a circuit for judging that the mode is a third mode when the potential level of the signal line is within the third level range.

55. A disk drive as set forth in claim 51, wherein
the companion circuit has a second mode setting circuit for setting the potential of the signal line to within a fourth level range including within the first, second, and third level ranges and
the active head circuit has a circuit for judging that the mode is a fourth mode when the potential of the signal line is within the fourth level range.

56. A disk drive as set forth in claim 52, wherein
the companion circuit has a second mode setting circuit for setting the potential of the signal line to within a fourth level range including within the first, second, and third level ranges and
the active head circuit has a circuit for judging that the mode is a fourth mode when the potential of the signal line is within the fourth level range.

57. A disk drive as set forth in claim 53, wherein
the companion circuit has a second mode setting circuit for setting the potential of the signal line to within a fourth level range including within the first, second, and third level ranges and
the active head circuit has a circuit for judging that the mode is a fourth mode when the potential of the signal line is within the fourth level range.

58. A disk drive as set forth in claim 54, wherein
the companion circuit has a second mode setting circuit for setting the potential of the signal line to within a fourth level range including within the first, second, and third level ranges and
the active head circuit has a circuit for judging that the mode is a fourth mode when the potential of the signal line is within the fourth level range.

59. A disk drive as set forth in claim 47, wherein
the active head circuit has a first fault detection circuit for making the potential of the signal line shift outside the first level range when a fault occurs in the write mode and
the companion circuit has a second fault detection circuit for generating a fault detection signal indicating that a fault has occurred in the write mode when the potential level of the signal line has shifted to outside the first level range regardless of it having to be within the first level range.

60. A disk drive as set forth in claim 48, wherein
the active head circuit has a first fault detection circuit for making the potential of the signal line shift outside the first level range when a fault occurs in the write mode and
the companion circuit has a second fault detection circuit for generating a fault detection signal indicating that a fault has occurred in the write mode when the potential level of the signal line has shifted to outside the first level range regardless of it having to be within the first level range.

61. A disk drive as set forth in claim 49, wherein
the active head circuit has a first fault detection circuit for making the potential of the signal line shift outside the first level range when a fault occurs in the write mode and
the companion circuit has a second fault detection circuit for generating a fault detection signal indicating that a fault has occurred in the write mode when the potential level of the signal line has shifted to outside the first level range regardless of it having to be within the first level range.

62. A disk drive as set forth in claim 50, wherein
the active head circuit has a first fault detection circuit for making the potential of the signal line shift outside the first level range when a fault occurs in the write mode and the companion circuit has a second fault detection circuit for generating a fault detection signal indicating that a fault has occurred in the write mode when the potential level of the signal line has shifted to outside the first level range regardless of it having to be within the first level range.

63. A disk drive as set forth in claim 51, wherein
the active head circuit has a first fault detection circuit for making the potential of the signal line shift outside the first level range when a fault occurs in the write mode and
the companion circuit has a second fault detection circuit for generating a fault detection signal indicating that a fault has occurred in the write mode when the potential level of the signal line has shifted to outside the first level range regardless of it having to be within the first level range.

64. A disk drive as set forth in claim 52, wherein
the active head circuit has a first fault detection circuit for making the potential of the signal line shift outside the first level range when a fault occurs in the write mode and
the companion circuit has a second fault detection circuit for generating a fault detection signal indicating that a fault has occurred in the write mode when the potential level of the signal line has shifted to outside the first level range regardless of it having to be within the first level range.

65. A disk drive as set forth in claim 53, wherein
the active head circuit has a first fault detection circuit for making the potential of the signal line shift outside the first level range when a fault occurs in the write mode and
the companion circuit has a second fault detection circuit for generating a fault detection signal indicating that a fault has occurred in the write mode when the potential level of the signal line has shifted to outside the first level range regardless of it having to be within the first level range.

66. A disk drive as set forth in claim 54, wherein
the active head circuit has a first fault detection circuit for making the potential of the signal line shift outside the first level range when a fault occurs in the write mode and
the companion circuit has a second fault detection circuit for generating a fault detection signal indicating that a fault has occurred in the write mode when the potential level of the signal line has shifted to outside the first level range regardless of it having to be within the first level range.

67. A disk drive as set forth in claim 55, wherein
the active head circuit has a first fault detection circuit for making the potential of the signal line shift outside the first level range when a fault occurs in the write mode and
the companion circuit has a second fault detection circuit for generating a fault detection signal indicating that a fault has occurred in the write mode when the potential level of the signal line has shifted to outside the first level range regardless of it having to be within the first level range.

68. A disk drive as set forth in claim 56, wherein
the active head circuit has a first fault detection circuit for making the potential of the signal line shift outside the first level range when a fault occurs in the write mode and
the companion circuit has a second fault detection circuit for generating a fault detection signal indicating that a fault has occurred in the write mode when the potential level of the signal line has shifted to outside the first level range regardless of it having to be within the first level range.

69. A disk drive as set forth in claim 57, wherein
the active head circuit has a first fault detection circuit for making the potential of the signal line shift outside the first level range when a fault occurs in the write mode and
the companion circuit has a second fault detection circuit for generating a fault detection signal indicating that a fault has occurred in the write mode when the potential level of the signal line has shifted to outside the first level range regardless of it having to be within the first level range.

70. A disk drive as set forth in claim 58, wherein
the active head circuit has a first fault detection circuit for making the potential of the signal line shift outside the first level range when a fault occurs in the write mode and
the companion circuit has a second fault detection circuit for generating a fault detection signal indicating that a fault has occurred in the write mode when the potential level of the signal line has shifted to outside the first level range regardless of it having to be within the first level range.

71. A disk drive as set forth in claim 47, wherein
the active head circuit has a first fault detection circuit for making the potential of the signal line shift outside the second level range when a fault occurs in the read mode and
the companion circuit has a second fault detection circuit for generating a fault detection signal indicating that a fault has occurred in the read mode when the potential level of the signal line has shifted to outside the second level range regardless of it having to be within the second level range.

72. A disk drive as set forth in claim 48, wherein
the active head circuit has a first fault detection circuit for making the potential of the signal line shift outside the second level range when a fault occurs in the read mode and
the companion circuit has a second fault detection circuit for generating a fault detection signal indicating that a fault has occurred in the read mode when the potential level of the signal line has shifted to outside the second level range regardless of it having to be within the second level range.

73. A disk drive as set forth in claim 49, wherein
the active head circuit has a first fault detection circuit for making the potential of the signal line shift outside the second level range when a fault occurs in the read mode and
the companion circuit has a second fault detection circuit for generating a fault detection signal indicating that a fault has occurred in the read mode when the potential level of the signal line has shifted to outside the second level range regardless of it having to be within the second level range.

74. A disk drive as set forth in claim 50, wherein
the active head circuit has a first fault detection circuit for making the potential of the signal line shift outside the second level range when a fault occurs in the read mode and
the companion circuit has a second fault detection circuit for generating a fault detection signal indicating that a fault has occurred in the read mode when the potential level of the signal line has shifted to outside the second level range regardless of it having to be within the second level range.

75. A disk drive as set forth in claim 51, wherein
the active head circuit has a first fault detection circuit for making the potential of the signal line shift outside the second level range when a fault occurs in the read mode and
the companion circuit has a second fault detection circuit for generating a fault detection signal indicating that a fault has occurred in the read mode when the potential level of the signal line has shifted to outside the second level range regardless of it having to be within the second level range.

76. A disk drive as set forth in claim 52, wherein
the active head circuit has a first fault detection circuit for making the potential of the signal line shift outside the second level range when a fault occurs in the read mode and
the companion circuit has a second fault detection circuit for generating a fault detection signal indicating that a fault has occurred in the read mode when the potential level of the signal line has shifted to outside the second level range regardless of it having to be within the second level range.

77. A disk drive as set forth in claim 53, wherein
the active head circuit has a first fault detection circuit for making the potential of the signal line shift outside the second level range when a fault occurs in the read mode and
the companion circuit has a second fault detection circuit for generating a fault detection signal indicating that a fault has occurred in the read mode when the potential level of the signal line has shifted to outside the second level range regardless of it having to be within the second level range.

78. A disk drive as set forth in claim 54, wherein
the active head circuit has a first fault detection circuit for making the potential of the signal line shift outside the second level range when a fault occurs in the read mode and
the companion circuit has a second fault detection circuit for generating a fault detection signal indicating that a fault has occurred in the read mode when the potential level of the signal line has shifted to outside the second level range regardless of it having to be within the second level range.

79. A disk drive as set forth in claim 55, wherein
the active head circuit has a first fault detection circuit for making the potential of the signal line shift outside the second level range when a fault occurs in the read mode and
the companion circuit has a second fault detection circuit for generating a fault detection signal indicating that a fault has occurred in the read mode when the potential level of the signal line has shifted to outside the second level range regardless of it having to be within the second level range.

80. A disk drive as set forth in claim 56, wherein
the active head circuit has a first fault detection circuit for making the potential of the signal line shift outside the second level range when a fault occurs in the read mode and
the companion circuit has a second fault detection circuit for generating a fault detection signal indicating that a fault has occurred in the read mode when the potential level of the signal line has shifted to outside the second level range regardless of it having to be within the second level range.

81. A disk drive as set forth in claim 57, wherein
the active head circuit has a first fault detection circuit for making the potential of the signal line shift outside the second level range when a fault occurs in the read mode and
the companion circuit has a second fault detection circuit for generating a fault detection signal indicating that a fault has occurred in the read mode when the potential level of the signal line has shifted to outside the second level range regardless of it having to be within the second level range.

82. A disk drive as set forth in claim 58, wherein
the active head circuit has a first fault detection circuit for making the potential of the signal line shift outside the second level range when a fault occurs in the read mode and
the companion circuit has a second fault detection circuit for generating a fault detection signal indicating that a fault has occurred in the read mode when the potential level of the signal line has shifted to outside the second level range regardless of it having to be within the second level range.

83. A disk drive as set forth in claim 59, wherein
the active head circuit has a third fault detection circuit for making the potential of the signal line shift outside the second level range when a fault occurs in the read mode and
the companion circuit has a fourth fault detection circuit for generating a fault detection signal indicating that a fault has occurred in the read mode when the potential level of the signal line has shifted to outside the second level range regardless of it having to be within the second level range.

84. A disk drive as set forth in claim 60, wherein
the active head circuit has a third fault detection circuit for making the potential of the signal line shift outside the second level range when a fault occurs in the read mode and
the companion circuit has a fourth fault detection circuit for generating a fault detection signal indicating that a fault has occurred in the read mode when the potential level of the signal line has shifted to outside the second level range regardless of it having to be within the second level range.

85. A disk drive as set forth in claim 61, wherein
the active head circuit has a third fault detection circuit for making the potential of the signal line shift outside the second level range when a fault occurs in the read mode and
the companion circuit has a fourth fault detection circuit for generating a fault detection signal indicating that a fault has occurred in the read mode when the potential level of the signal line has shifted to outside the second level range regardless of it having to be within the second level range.

86. A disk drive as set forth in claim 62, wherein
the active head circuit has a third fault detection circuit for making the potential of the signal line shift outside the second level range when a fault occurs in the read mode and
the companion circuit has a fourth fault detection circuit for generating a fault detection signal indicating that a fault has occurred in the read mode when the potential level of the signal line has shifted to outside the second level range regardless of it having to be within the second level range.

87. A disk drive as set forth in claim 63, wherein
the active head circuit has a third fault detection circuit for making the potential of the signal line shift outside the second level range when a fault occurs in the read mode and
the companion circuit has a fourth fault detection circuit for generating a fault detection signal indicating that a fault has occurred in the read mode when the potential level of the signal line has shifted to outside the second level range regardless of it having to be within the second level range.

88. A disk drive as set forth in claim 64, wherein
the active head circuit has a third fault detection circuit for making the potential of the signal line shift outside the second level range when a fault occurs in the read mode and
the companion circuit has a fourth fault detection circuit for generating a fault detection signal indicating that a fault has occurred in the read mode when the potential level of the signal line has shifted to outside the second level range regardless of it having to be within the second level range.

89. A disk drive as set forth in claim 65, wherein
the active head circuit has a third fault detection circuit for making the potential of the signal line shift outside the second level range when a fault occurs in the read mode and
the companion circuit has a fourth fault detection circuit for generating a fault detection signal indicating that a fault has occurred in the read mode when the potential level of the signal line has shifted to outside the second level range regardless of it having to be within the second level range.

90. A disk drive as set forth in claim 66, wherein
the active head circuit has a third fault detection circuit for making the potential of the signal line shift outside the second level range when a fault occurs in the read mode and
the companion circuit has a fourth fault detection circuit for generating a fault detection signal indicating that a fault has occurred in the read mode when the potential level of the signal line has shifted to outside the second level range regardless of it having to be within the second level range.

91. A disk drive as set forth in claim 67, wherein
the active head circuit has a third fault detection circuit for making the potential of the signal line shift outside the second level range when a fault occurs in the read mode and
the companion circuit has a fourth fault detection circuit for generating a fault detection signal indicating that a fault has occurred in the read mode when the potential level of the signal line has shifted to outside the second level range regardless of it having to be within the second level range.

92. A disk drive as set forth in claim 68, wherein
the active head circuit has a third fault detection circuit for making the potential of the signal line shift outside the second level range when a fault occurs in the read mode and
the companion circuit has a fourth fault detection circuit for generating a fault detection signal indicating that a fault has occurred in the read mode when the potential level of the signal line has shifted to outside the second level range regardless of it having to be within the second level range.

93. A disk drive as set forth in claim 69, wherein
the active head circuit has a third fault detection circuit for making the potential of the signal line shift outside the second level range when a fault occurs in the read mode and
the companion circuit has a fourth fault detection circuit for generating a fault detection signal indicating that a fault has occurred in the read mode when the potential level of the signal line has shifted to outside the second level range regardless of it having to be within the second level range.

94. A disk drive as set forth in claim 70, wherein
the active head circuit has a third fault detection circuit for making the potential of the signal line shift outside the second level range when a fault occurs in the read mode and
the companion circuit has a fourth fault detection circuit for generating a fault detection signal indicating that a fault has occurred in the read mode when the potential level of the signal line has shifted to outside the second level range regardless of it having to be within the second level range.

95. A disk drive as set forth in claim 51, wherein
the active head circuit has a first fault detection circuit for making the potential of the signal line shift outside the third level range when a fault occurs in the third mode and
the companion circuit has a second fault detection circuit for generating a fault detection signal indicating that a fault has occurred in the third mode when the potential level of the signal line has shifted to outside the third level range regardless of it having to be within the third level range.

96. A disk drive as set forth in claim 52, wherein
the active head circuit has a first fault detection circuit for making the potential of the signal line shift outside the third level range when a fault occurs in the third mode and
the companion circuit has a second fault detection circuit for generating a fault detection signal indicating that a fault has occurred in the third mode when the potential level of the signal line has shifted to outside the third level range regardless of it having to be within the third level range.

97. A disk drive as set forth in claim 53, wherein
the active head circuit has a first fault detection circuit for making the potential of the signal line shift outside the third level range when a fault occurs in the third mode and
the companion circuit has a second fault detection circuit for generating a fault detection signal indicating that a fault has occurred in the third mode when the potential level of the signal line has shifted to outside the third level range regardless of it having to be within the third level range.

98. A disk drive as set forth in claim 54, wherein
the active head circuit has a first fault detection circuit for making the potential of the signal line shift outside the third level range when a fault occurs in the third mode and
the companion circuit has a second fault detection circuit for generating a fault detection signal indicating that a fault has occurred in the third mode when the potential level of the signal line has shifted to outside the third level range regardless of it having to be within the third level range.

99. A disk drive as set forth in claim 55, wherein
the active head circuit has a first fault detection circuit for making the potential of the signal line shift outside the third level range when a fault occurs in the third mode and
the companion circuit has a second fault detection circuit for generating a fault detection signal indicating that a fault has occurred in the third mode when the potential level of the signal line has shifted to outside the third level range regardless of it having to be within the third level range.

100. A disk drive as set forth in claim 56, wherein
the active head circuit has a first fault detection circuit for making the potential of the signal line shift outside the third level range when a fault occurs in the third mode and
the companion circuit has a second fault detection circuit for generating a fault detection signal indicating that a fault has occurred in the third mode when the potential level of the signal line has shifted to outside the third level range regardless of it having to be within the third level range.

101. A disk drive as set forth in claim 57, wherein
the active head circuit has a first fault detection circuit for making the potential of the signal line shift outside the third level range when a fault occurs in the third mode and
the companion circuit has a second fault detection circuit for generating a fault detection signal indicating that a fault has occurred in the third mode when the potential level of the signal line has shifted to outside the third level range regardless of it having to be within the third level range.

102. A disk drive as set forth in claim 58, wherein
the active head circuit has a first fault detection circuit for making the potential of the signal line shift outside the third level range when a fault occurs in the third mode and
the companion circuit has a second fault detection circuit for generating a fault detection signal indicating that a fault has occurred in the third mode when the potential level of the signal line has shifted to outside the third level range regardless of it having to be within the third level range.

103. A disk drive as set forth in claim 59, wherein
the active head circuit has a third fault detection circuit for making the potential of the signal line shift outside the third level range when a fault occurs in the third mode and
the companion circuit has a fourth fault detection circuit for generating a fault detection signal indicating that a fault has occurred in the third mode when the potential level of the signal line has shifted to outside the third level range regardless of it having to be within the third level range.

104. A disk drive as set forth in claim 60, wherein
the active head circuit has a third fault detection circuit for making the potential of the signal line shift outside the third level range when a fault occurs in the third mode and
the companion circuit has a fourth fault detection circuit for generating a fault detection signal indicating that a fault has occurred in the third mode when the potential level of the signal line has shifted to outside the third level range regardless of it having to be within the third level range.

105. A disk drive as set forth in claim 61, wherein
the active head circuit has a third fault detection circuit for making the potential of the signal line shift outside the third level range when a fault occurs in the third mode and
the companion circuit has a fourth fault detection circuit for generating a fault detection signal indicating that a fault has occurred in the third mode when the potential level of the signal line has shifted to outside the third level range regardless of it having to be within the third level range.

106. A disk drive as set forth in claim 62, wherein
the active head circuit has a third fault detection circuit for making the potential of the signal line shift outside the third level range when a fault occurs in the third mode and
the companion circuit has a fourth fault detection circuit for generating a fault detection signal indicating that a fault has occurred in the third mode when the potential level of the signal line has shifted to outside the third level range regardless of it having to be within the third level range.

107. A disk drive as set forth in claim 63, wherein
the active head circuit has a third fault detection circuit for making the potential of the signal line shift outside the third level range when a fault occurs in the third mode and
the companion circuit has a fourth fault detection circuit for generating a fault detection signal indicating that a fault has occurred in the third mode when the potential level of the signal line has shifted to outside the third level range regardless of it having to be within the third level range.

108. A disk drive as set forth in claim 64, wherein
the active head circuit has a third fault detection circuit for making the potential of the signal line shift outside the third level range when a fault occurs in the third mode and
the companion circuit has a fourth fault detection circuit for generating a fault detection signal indicating that a fault has occurred in the third mode when the potential level of the signal line has shifted to outside the third level range regardless of it having to be within the third level range.

109. A disk drive as set forth in claim 65, wherein
the active head circuit has a third fault detection circuit for making the potential of the signal line shift outside the third level range when a fault occurs in the third mode and
the companion circuit has a fourth fault detection circuit for generating a fault detection signal indicating that a fault has occurred in the third mode when the potential level of the signal line has shifted to outside the third level range regardless of it having to be within the third level range.

110. A disk drive as set forth in claim 66, wherein
the active head circuit has a third fault detection circuit for making the potential of the signal line shift outside the third level range when a fault occurs in the third mode and
the companion circuit has a fourth fault detection circuit for generating a fault detection signal indicating that a fault has occurred in the third mode when the potential level of the signal line has shifted to outside the third level range regardless of it having to be within the third level range.

111. A disk drive as set forth in claim 67, wherein
the active head circuit has a third fault detection circuit for making the potential of the signal line shift outside the third level range when a fault occurs in the third mode and
the companion circuit has a fourth fault detection circuit for generating a fault detection signal indicating that a fault has occurred in the third mode when the potential level of the signal line has shifted to outside the third level range regardless of it having to be within the third level range.

112. A disk drive as set forth in claim 68, wherein
the active head circuit has a third fault detection circuit for making the potential of the signal line shift outside the third level range when a fault occurs in the third mode and
the companion circuit has a fourth fault detection circuit for generating a fault detection signal indicating that a fault has occurred in the third mode when the potential level of the signal line has shifted to outside the third level range regardless of it having to be within the third level range.

113. A disk drive as set forth in claim 69, wherein
the active head circuit has a third fault detection circuit for making the potential of the signal line shift outside the third level range when a fault occurs in the third mode and
the companion circuit has a fourth fault detection circuit for generating a fault detection signal indicating that a fault has occurred in the third mode when the potential level of the signal line has shifted to outside the third level range regardless of it having to be within the third level range.

114. A disk drive as set forth in claim 70, wherein
the active head circuit has a third fault detection circuit for making the potential of the signal line shift outside the third level range when a fault occurs in the third mode and
the companion circuit has a fourth fault detection circuit for generating a fault detection signal indicating that a fault has occurred in the third mode when the potential level of the signal line has shifted to outside the third level range regardless of it having to be within the third level range.

115. A disk drive as set forth in claim 71, wherein
the active head circuit has a third fault detection circuit for making the potential of the signal line shift outside the third level range when a fault occurs in the third mode and
the companion circuit has a fourth fault detection circuit for generating a fault detection signal indicating that a fault has occurred in the third mode when the potential level of the signal line has shifted to outside the third level range regardless of it having to be within the third level range.

116. A disk drive as set forth in claim 72, wherein
the active head circuit has a third fault detection circuit for making the potential of the signal line shift outside the third level range when a fault occurs in the third mode and
the companion circuit has a fourth fault detection circuit for generating a fault detection signal indicating that a fault has occurred in the third mode when the potential level of the signal line has shifted to outside the third level range regardless of it having to be within the third level range.

117. A disk drive as set forth in claim 73, wherein
the active head circuit has a third fault detection circuit for making the potential of the signal line shift outside the third level range when a fault occurs in the third mode and
the companion circuit has a fourth fault detection circuit for generating a fault detection signal indicating that a fault has occurred in the third mode when the potential level of the signal line has shifted to outside the third level range regardless of it having to be within the third level range.

118. A disk drive as set forth in claim 74, wherein
the active head circuit has a third fault detection circuit for making the potential of the signal line shift outside the third level range when a fault occurs in the third mode and
the companion circuit has a fourth fault detection circuit for generating a fault detection signal indicating that a fault has occurred in the third mode when the potential level of the signal line has shifted to outside the third level range regardless of it having to be within the third level range.

119. A disk drive as set forth in claim 75, wherein
the active head circuit has a third fault detection circuit for making the potential of the signal line shift outside the third level range when a fault occurs in the third mode and
the companion circuit has a fourth fault detection circuit for generating a fault detection signal indicating that a fault has occurred in the third mode when the potential level of the signal line has shifted to outside the third level range regardless of it having to be within the third level range.

120. A disk drive as set forth in claim 76, wherein
the active head circuit has a third fault detection circuit for making the potential of the signal line shift outside the third level range when a fault occurs in the third mode and
the companion circuit has a fourth fault detection circuit for generating a fault detection signal indicating that a fault has occurred in the third mode when the potential level of the signal line has shifted to outside the third level range regardless of it having to be within the third level range.

121. A disk drive as set forth in claim 77, wherein
the active head circuit has a third fault detection circuit for making the potential of the signal line shift outside the third level range when a fault occurs in the third mode and
the companion circuit has a fourth fault detection circuit for generating a fault detection signal indicating that a fault has occurred in the third mode when the potential level of the signal line has shifted to outside the third level range regardless of it having to be within the third level range.

122. A disk drive as set forth in claim 78, wherein
the active head circuit has a third fault detection circuit for making the potential of the signal line shift outside the third level range when a fault occurs in the third mode and
the companion circuit has a fourth fault detection circuit for generating a fault detection signal indicating that a fault has occurred in the third mode when the potential level of the signal line has shifted to outside the third level range regardless of it having to be within the third level range.

123. A disk drive as set forth in claim 79, wherein
the active head circuit has a third fault detection circuit for making the potential of the signal line shift outside the third level range when a fault occurs in the third mode and
the companion circuit has a fourth fault detection circuit for generating a fault detection signal indicating that a fault has occurred in the third mode when the potential level of the signal line has shifted to outside the third level range regardless of it having to be within the third level range.

124. A disk drive as set forth in claim 80, wherein
the active head circuit has a third fault detection circuit for making the potential of the signal line shift outside the third level range when a fault occurs in the third mode and
the companion circuit has a fourth fault detection circuit for generating a fault detection signal indicating that a fault has occurred in the third mode when the potential level of the signal line has shifted to outside the third level range regardless of it having to be within the third level range.

125. A disk drive as set forth in claim 81, wherein
the active head circuit has a third fault detection circuit for making the potential of the signal line shift outside the third level range when a fault occurs in the third mode and
the companion circuit has a fourth fault detection circuit for generating a fault detection signal indicating that a fault has occurred in the third mode when the potential level of the signal line has shifted to outside the third level range regardless of it having to be within the third level range.

126. A disk drive as set forth in claim 82, wherein
the active head circuit has a third fault detection circuit for making the potential of the signal line shift outside the third level range when a fault occurs in the third mode and
the companion circuit has a fourth fault detection circuit for generating a fault detection signal indicating that a fault has occurred in the third mode when the potential level of the signal line has shifted to outside the third level range regardless of it having to be within the third level range.

127. A disk drive as set forth in claim 83, wherein
the active head circuit has a fifth fault detection circuit for making the potential of the signal line shift outside the third level range when a fault occurs in the third mode and
the companion circuit has a sixth fault detection circuit for generating a fault detection signal indicating that a fault has occurred in the third mode when the potential level of the signal line has shifted to outside the third level range regardless of it having to be within the third level range.

128. A disk drive as set forth in claim 84, wherein
the active head circuit has a fifth fault detection circuit for making the potential of the signal line shift outside the third level range when a fault occurs in the third mode and
the companion circuit has a sixth fault detection circuit for generating a fault detection signal indicating that a fault has occurred in the third mode when the potential level of the signal line has shifted to outside the third level range regardless of it having to be within the third level range.

129. A disk drive as set forth in claim 85, wherein
the active head circuit has a fifth fault detection circuit for making the potential of the signal line shift outside the third level range when a fault occurs in the third mode and
the companion circuit has a sixth fault detection circuit for generating a fault detection signal indicating that a fault has occurred in the third mode when the potential level of the signal line has shifted to outside the third level range regardless of it having to be within the third level range.

130. A disk drive as set forth in claim 86, wherein
the active head circuit has a fifth fault detection circuit for making the potential of the signal line shift outside the third level range when a fault occurs in the third mode and
the companion circuit has a sixth fault detection circuit for generating a fault detection signal indicating that a fault has occurred in the third mode when the potential level of the signal line has shifted to outside the third level range regardless of it having to be within the third level range.

131. A disk drive as set forth in claim 87, wherein
the active head circuit has a fifth fault detection circuit for making the potential of the signal line shift outside the third level range when a fault occurs in the third mode and
the companion circuit has a sixth fault detection circuit for generating a fault detection signal indicating that a fault has occurred in the third mode when the potential level of the signal line has shifted to outside the third level range regardless of it having to be within the third level range.

132. A disk drive as set forth in claim 88, wherein
the active head circuit has a fifth fault detection circuit for making the potential of the signal line shift outside the third level range when a fault occurs in the third mode and
the companion circuit has a sixth fault detection circuit for generating a fault detection signal indicating that a fault has occurred in the third mode when the potential level of the signal line has shifted to outside the third level range regardless of it having to be within the third level range.

133. A disk drive as set forth in claim 89, wherein
the active head circuit has a fifth fault detection circuit for making the potential of the signal line shift outside the third level range when a fault occurs in the third mode and
the companion circuit has a sixth fault detection circuit for generating a fault detection signal indicating that a fault has occurred in the third mode when the potential level of the signal line has shifted to outside the third level range regardless of it having to be within the third level range.

134. A disk drive as set forth in claim 90, wherein
the active head circuit has a fifth fault detection circuit for making the potential of the signal line shift outside the third level range when a fault occurs in the third mode and
the companion circuit has a sixth fault detection circuit for generating a fault detection signal indicating that a fault has occurred in the third mode when the potential level of the signal line has shifted to outside the third level range regardless of it having to be within the third level range.

135. A disk drive as set forth in claim 91, wherein
the active head circuit has a fifth fault detection circuit for making the potential of the signal line shift outside the third level range when a fault occurs in the third mode and
the companion circuit has a sixth fault detection circuit for generating a fault detection signal indicating that a fault has occurred in the third mode when the potential level of the signal line has shifted to outside the third level range regardless of it having to be within the third level range.

136. A disk drive as set forth in claim 92, wherein
the active head circuit has a fifth fault detection circuit for making the potential of the signal line shift outside the third level range when a fault occurs in the third mode and
the companion circuit has a sixth fault detection circuit for generating a fault detection signal indicating that a fault has occurred in the third mode when the potential level of the signal line has shifted to outside the third level range regardless of it having to be within the third level range.

137. A disk drive as set forth in claim 93, wherein
the active head circuit has a fifth fault detection circuit for making the potential of the signal line shift outside the third level range when a fault occurs in the third mode and
the companion circuit has a sixth fault detection circuit for generating a fault detection signal indicating that a fault has occurred in the third mode when the potential level of the signal line has shifted to outside the third level range regardless of it having to be within the third level range.

138. A disk drive as set forth in claim 94, wherein
the active head circuit has a fifth fault detection circuit for making the potential of the signal line shift outside the third level range when a fault occurs in the third mode and
the companion circuit has a sixth fault detection circuit for generating a fault detection signal indicating that a fault has occurred in the third mode when the potential level of the signal line has shifted to outside the third level range regardless of it having to be within the third level range.
